(19) Europäisches Patentamt
European Patent Office
Office européen des brevets

(11) **EP 4 626 109 A1**

(12) **EUROPEAN PATENT APPLICATION**
published in accordance with Art. 153(4) EPC

(43) Date of publication:
**01.10.2025 Bulletin 2025/40**

(21) Application number: **23905945.4**

(22) Date of filing: **19.12.2023**

(51) International Patent Classification (IPC):
**H04W 72/0453** (2023.01)

(52) Cooperative Patent Classification (CPC):
**H04W 28/26; H04W 72/0453; H04W 72/23**

(86) International application number:
**PCT/CN2023/139851**

(87) International publication number:
**WO 2024/131782 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 CN 202211642123**

(71) Applicant: **Huawei Technologies Co., Ltd.
Shenzhen, Guangdong 518129 (CN)**

(72) Inventors:
• **WANG, Xiaolu
Shenzhen, Guangdong 518129 (CN)**
• **QIAO, Yunfei
Shenzhen, Guangdong 518129 (CN)**
• **DU, Yinggang
Shenzhen, Guangdong 518129 (CN)**
• **LI, Rong
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57) A communication method and a communication apparatus are provided. The communication method includes: A terminal device determines a first resource candidate set, and receives data on the first resource candidate set. The first resource candidate set is a resource candidate set in a PDCCH search space blind detection set determined based on a tone reservation pattern. The PDCCH search space blind detection set includes resource candidate sets respectively corresponding to a plurality of ALs. In a scenario in which a TR technology is used, the first resource candidate set is determined based on the tone reservation pattern, so that more subcarriers can be actually used for carrying the data, thereby improving decoding performance of a receive end.

FIG. 5

**Description**

<u>CROSS-REFERENCE TO RELATED APPLICATIONS</u>

This application claims priority to Chinese Patent Application No. 202211642123.6, filed with the China National Intellectual Property Administration on December 20, 2022 and entitled "COMMUNICATION METHOD AND COMMUNICATION APPARATUS", which is incorporated herein by reference in its entirety.

<u>TECHNICAL FIELD</u>

This application relates to the field of communication technologies, and in particular, to a communication method and a communication apparatus.

<u>BACKGROUND</u>

A tone reservation (tone reservation, TR) technology may be used to suppress a peak-to-average power ratio (peak-to-average power ratio, PAPR) of a waveform. To be specific, a transmit end reserves some subcarriers for carrying signals for suppressing the PAPR. The tone reservation reduces a quantity of carriers carrying data signals, that is, reduces a quantity of resources for sending data, or a quantity of resources for channel estimation. Consequently, decoding performance of a receive end is reduced.

<u>SUMMARY</u>

This application provides a communication method and a communication apparatus, so that a transmit end has as many resources for data sending or resources for channel estimation as possible, and decoding performance of a receive end is improved.

According to a first aspect, an embodiment of this application provides a communication method. The method may be performed by a first communication apparatus. The first communication apparatus may be a communication device or a communication apparatus, for example, a chip system, that can support the communication device in implementing a function required by the method. For example, the communication device is a terminal device, or a chip arranged in the terminal device, or another part configured to implement functions of the terminal device. The following describes the communication method provided in the first aspect by using an example in which the first communication apparatus is the terminal device.

The communication method includes: The terminal device determines a first resource candidate set, and receives data on the first resource candidate set, where the first resource candidate set is a resource candidate set in a physical downlink control channel (physical downlink control channel, PDCCH) search space blind detection set determined based on a tone reservation pattern, and the PDCCH search space blind detection set includes resource candidate sets respectively corresponding to a plurality of aggregation levels (aggregation levels, ALs).

In this embodiment of this application, the terminal device may determine, from the PDCCH search space blind detection set based on the tone reservation pattern, a resource candidate set for receiving a PDCCH, for example, the first resource candidate set. That is, when a candidate resource used for receiving the data is determined, a subcarrier used as a reserved carrier is considered. In a scenario in which a TR technology is used, according to the method provided in this embodiment of this application, more subcarriers can be actually used for carrying the data, improving decoding performance of a receive end.

In an implementation, the first resource candidate set includes X subcarriers, a difference between a sequence number A1 of a 1st subcarrier in the X subcarriers and a sequence number A2 of a last subcarrier in the X subcarriers is greater than X, and at least one reserved subcarrier is included between the 1st subcarrier and the last subcarrier, where X is a positive integer, and A1 and A2 are positive integers.

In the foregoing implementation, the difference between the sequence number A1 of the 1st subcarrier in the X subcarriers included in the first resource candidate set and the sequence number A2 of the last subcarrier in the X subcarriers is greater than X, that is, subcarriers used as reserved carriers exist between the X subcarriers.

In an implementation, the X subcarriers include a first part and a second part, the first part and the second part are spaced by a part of subcarriers in a second resource candidate set, and an AL corresponding to the second resource candidate set is the same as an AL corresponding to the first resource candidate set.

In the foregoing implementation, subcarriers in one resource candidate set may be divided into two parts, namely, a first part and a second part. The first part includes a subcarrier used as a reserved carrier, and the second part may be considered as a subcarrier for carrying data that is added due to the reserved carrier in the first part. For example, a quantity of subcarriers used for carrying the data in the second part is at least equal to a quantity of subcarriers used as reserved carriers included in the first part. In this way, the decoding performance of the receive end is improved. A first part and a second part that are of the first resource candidate set are spaced by a part of subcarriers in the second resource candidate set. For example, a second part of one resource candidate set may include subcarriers far away from a first part, that is, a 1st subcarrier in the second part and a last subcarrier in the first part may not be consecutive. Certainly, a second part of one resource candidate set may include subcarriers close to a first part. For example, a 1st subcarrier in the second part and a last subcarrier in the first part may be consecutive.

In an implementation, the sequence number of the last subcarrier in the first resource candidate set is less than a sequence number of a last subcarrier in the second resource candidate set.

In an implementation, the second part of the first resource candidate set includes a second part of a third resource candidate set, and the AL corresponding to the first resource candidate set is higher than an AL corresponding to the third resource candidate set.

In an implementation, the quantity of subcarriers used for carrying the data in the second part is less than the quantity of subcarriers used as the reserved carriers included in the first part. In this way, the decoding performance of the receive end can also be improved.

In the foregoing implementation, a second part of a resource candidate set corresponding to a high AL includes a second part of a resource candidate set corresponding to a low AL. In this way, mutual interference between second parts of resource candidate sets corresponding to different ALs can be avoided, to improve resource utilization.

In an implementation, the second part belongs to a first resource set, and the method further includes: The terminal device receives first configuration information from a network device, where the first configuration information indicates the first resource set.

In the foregoing implementation, the network device may configure the first resource set, and the terminal device determines the second part of the first resource candidate set from the first resource set. For example, the terminal device determines the second part based on the reserved carriers in the first resource candidate set, and the network device does not need to notify the terminal device of the second part, so that signaling overheads can be reduced.

In an implementation, the second part belongs to a first resource set, and the method further includes: The terminal device receives second configuration information from a network device, where the second configuration information indicates u physical resource block (physical resource block, PRB) groups, $\varphi$ PRB groups in the u PRB groups are the first resource set, and $\varphi = \text{rem}(u, v)$, where rem indicates modulo calculation, u is a positive integer, and v is an AL.

In the foregoing implementation, the network device may configure the first resource set by configuring a PDCCH resource for the terminal device. The network device does not need to separately configure the first resource set for the terminal device, so that the signaling overheads can be reduced.

Optionally, the $\varphi$ PRB groups are PRB groups with largest sequence numbers in the u PRB groups; or the $\varphi$ PRB groups are PRB groups with smallest sequence numbers in the u PRB groups.

In an implementation, the method further includes: The terminal device receives first indication information from the network device, where the first indication information indicates a quantity of subcarriers included in a second part corresponding to each of a plurality of resource candidate sets corresponding to the AL corresponding to the first resource candidate set.

In the foregoing implementation, the network device may configure a quantity of subcarriers included in a second part corresponding to each of a plurality of resource candidate sets corresponding to one AL For any one of the resource candidate sets, the terminal device does not need to determine, based on reserved carriers in a first part included in the resource candidate set, a quantity of subcarriers included in a second part. In this way, processing complexity of the terminal device can be reduced.

In an implementation, the method further includes: The terminal device receives second indication information from the network device, where the second indication information indicates an AL at which the terminal device does not perform blind detection or an AL at which the terminal device performs blind detection.

In the foregoing implementation, the terminal device may determine, based on an indication of the network device, ALs at which blind detection is performed, and does not need to perform blind detection at all ALs, to reduce energy consumption of the terminal device.

According to a second aspect, an embodiment of this application provides a communication method. The method may be performed by a second communication apparatus. The second communication apparatus may be a communication device or a communication apparatus, for example, a chip system, that can support the communication device in implementing a function required by the method. For example, the communication device is a network device, a chip arranged in a network device, or another part configured to implement functions of the network device. The following describes the communication method provided in the second aspect by using an example in which the second communication apparatus is a network device.

The communication method includes: The network device determines a first resource candidate set, and sends data on the first resource candidate set, where the first resource candidate set is a resource candidate set in a PDCCH search space blind detection set determined based on a tone reservation pattern, and the PDCCH search space blind detection set includes resource candidate sets respectively corresponding to a plurality of ALs.

In an implementation, the first resource candidate set includes X subcarriers, a difference between a sequence number A1 of a 1st subcarrier in the X subcarriers and a sequence number A2 of a last subcarrier in the X subcarriers is greater than X, and at least one reserved subcarrier is included between the 1st subcarrier and the last subcarrier, where X is a positive integer, and A1 and A2 are positive integers.

In an implementation, the X subcarriers include a first part and a second part, the first part and the second part are spaced by a part of subcarriers in a second resource candidate set, and an AL corresponding to the second resource candidate set is the same as an AL corresponding to the first resource candidate set.

In an implementation, the sequence number of the last subcarrier in the first resource candidate set is less than a sequence number of a last subcarrier in the second resource candidate set.

In an implementation, the second part of the first resource candidate set includes a second part of a third resource candidate set, and the AL corresponding to the first resource candidate set is higher than an AL corresponding to the third resource candidate set.

In an implementation, a quantity of subcarriers used for carrying the data in the second part is less than a quantity of subcarriers used as the reserved carriers included in the first part.

In an implementation, the second part belongs to a first resource set, and the method further includes: The network device sends first configuration information to a terminal device, where the first configuration information indicates the first resource set.

In an implementation, the method further includes: The network device sends second configuration information to a terminal device, where the second configuration information indicates u PRB groups, $\varphi$ PRB groups in the u PRB groups are a first resource set, and $\varphi = \mathrm{rem}(u, v)$, where rem indicates modulo calculation, u is a positive integer, and v is an AL; and the second part belongs to the first resource set.

In an implementation, the method further includes: The network device sends first indication information to the terminal device, where the first indication information indicates a quantity of subcarriers included in a second part corresponding to each of a plurality of resource candidate sets corresponding to the AL corresponding to the first resource candidate set.

In an implementation, the method further includes: The network device sends second indication information to the terminal device, where the second indication information indicates an AL at which the terminal device does not perform blind detection or an AL at which the terminal device performs blind detection.

For beneficial effects of the second aspect and implementations of the second aspect, refer to descriptions of beneficial effects of the first aspect and implementations of the first aspect.

According to a third aspect, an embodiment of this application provides a communication apparatus. The communication apparatus has a function of implementing behavior in the method embodiment of the first aspect or the second aspect. For beneficial effects, refer to descriptions of the first aspect. Details are not described herein again.

The communication apparatus may be the communication apparatus in the first aspect, or the communication apparatus may be an apparatus, such as a chip or a chip system, that can implement the method provided in the first aspect. In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit. It may also be understood that the sending unit and the receiving unit are a same functional module. Alternatively, the transceiver unit is understood as a collective name of a sending unit and a receiving unit, and the sending unit and the receiving unit may be different functional modules. These units (modules) may perform a corresponding function in the method examples in the first aspect. For details, refer to detailed descriptions in the method examples. Details are not described herein again.

The communication apparatus may be the communication apparatus in the second aspect, or the communication apparatus may be an apparatus, such as a chip or a chip system, that can implement the method provided in the second aspect. In a possible design, the communication apparatus includes a corresponding means (means) or module configured to perform the method in the second aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit. It may also be understood that the sending unit and the receiving unit are a same functional module. Alternatively, the transceiver unit is understood as a collective name of a sending unit and a receiving unit, and the sending unit and the receiving unit may be different functional modules. These units (modules) may perform a corresponding function in the method examples in the second aspect. For details, refer to detailed descriptions in the method examples. Details are not described herein again.

According to a fourth aspect, an embodiment of this application provides a communication apparatus. The communication apparatus may be the communication apparatus in the third aspect, or may be a chip or a chip system arranged in the communication apparatus in the third aspect. The communication apparatus may be a terminal device or a network device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the communication apparatus in the foregoing methods.

According to a fifth aspect, an embodiment of this application provides a communication apparatus. The communication apparatus includes an input/output interface and a logic circuit. The input/output interface is configured to input and/or output information. The logic circuit is configured to perform the method according to either of the first aspect and the second aspect.

According to a sixth aspect, an embodiment of this application provides a chip system. The chip system includes a processor, and may further include a communication interface, to implement the method according to either of the first aspect and the second aspect. In a possible implementation, the chip system further includes a memory configured to store a computer program. The chip system may include a chip, or may include a chip and another discrete component.

According to a seventh aspect, an embodiment of this application provides a communication system. The communication system includes a terminal device and a network device that are configured to implement related functions according to either of the first aspect and the second aspect. Certainly, the communication system may include more terminal devices or more network devices.

According to an eighth aspect, this application provides a computer-readable storage medium, where the computer-readable storage medium stores a computer program. When the computer program is run, the method according to either of the first aspect and the second aspect is implemented.

According to a ninth aspect, a computer program product is provided, where the computer program product includes computer program code. When the computer program code is run, the method according to either of the first aspect and the second aspect is caused to be performed.

For beneficial effects of the third aspect to the ninth aspect and implementations of the third aspect to the ninth aspect, refer to descriptions of beneficial effects of the first aspect and implementations of the first aspect.

BRIEF DESCRIPTION OF DRAWINGS

FIG. 1 is a diagram of an architecture of a communication system to which an embodiment of this application is applicable;

FIG. 2 is a diagram of an architecture of another communication system to which an embodiment of this application is applicable;

FIG. 3 is a diagram of a network architecture of still another communication system to which an embodiment of this application is applicable;

FIG. 4 is a diagram of a PDCCH search space blind detection set according to an embodiment of this application;

FIG. 5 is a schematic flowchart of a communication method according to an embodiment of this application;

FIG. 6 is a diagram of a plurality of resource candidate sets corresponding to an AL of 4 according to an embodiment of this application;

FIG. 7 is a diagram of a resource candidate set for one terminal device to perform blind detection according to an embodiment of this application;

FIG. 8 is a diagram of decoding performance of a terminal device according to an embodiment of this application;

FIG. 9 is a diagram of a plurality of resource candidate sets according to an embodiment of this application;

FIG. 10 is another diagram of a resource candidate set for one terminal device to perform blind detection according to an embodiment of this application;

FIG. 11 is a diagram of PDCCH candidate sets and first resource sets respectively corresponding to a plurality of ALs (4, 8, and 16) according to an embodiment of this application;

FIG. 12 is a diagram of resource candidate sets respectively corresponding to a plurality of ALs (4, 8, and 16) according to an embodiment of this application;

FIG. 13 is a diagram of a structure of a communication apparatus according to an embodiment of this application; and

FIG. 14 is a diagram of another structure of a communication apparatus according to an embodiment of this application.

DESCRIPTION OF EMBODIMENTS

Technical solutions provided in embodiments of this application may be applied to a new radio (new radio, NR) system, a long term evolution (long term evolution, LTE) system, and a non-terrestrial network (non-terrestrial network, NTN) system, or may be further applied to a next generation mobile communication system or another similar communication system. The technical solutions provided in embodiments of this application may be further applied to a vehicle-to-everything (vehicle-to-everything, V2X) system, an internet of things (Internet of things, IoT) system, and the like.

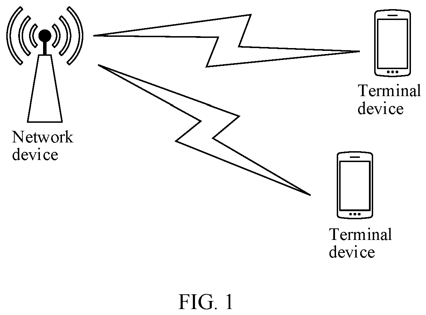

In an example, FIG. 1 is a diagram of a network architecture of a communication system to which an embodiment of this application is applicable. The communication system may include a network device and two terminal devices. The two terminal devices may be mobile terminal devices and/or any other suitable devices for communication in a wireless communication system, and both may be connected to the network device. Both the two terminal devices can communicate with the network device. Certainly, a quantity of terminal devices in FIG. 1 is merely an example. There may be fewer or more terminal devices.

In embodiments of this application, the terminal device is a device having a wireless transceiver function, and may send a signal to the network device, or receive a signal from the network device. The terminal device may include user equipment (user equipment, UE), and is sometimes also referred to as a terminal, a terminal apparatus, an access station, a UE station, a remote station, a wireless communication device, a user apparatus, or the like. The terminal device is configured to connect a person, an object, a machine, and the like, and may be widely used in various scenarios, for example, including but not limited to the following scenarios: cellular communication and device to device (device to device, D2D), V2X, machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an unmanned aerial vehicle, and a robot. The terminal device may alternatively be a wearable device. The wearable device may also be referred to as a wearable intelligent device, an intelligent wearable device, or the like, and is a general term of wearable devices, such as glasses, gloves, watches, clothing, and shoes, that are intelligently designed and developed for daily wear by using a wearable technology.

If the various terminal devices described above are located on a vehicle (for example, placed in the vehicle or mounted in the vehicle), the terminal devices may all be considered as vehicle-mounted terminal devices. For example, the vehicle-mounted terminal device is also referred to as an on-board unit (on-board unit, OBU). Alternatively, the terminal device in embodiments of this application may be a vehicle-mounted module, a vehicle-mounted assembly, a vehicle-mounted part, a vehicle-mounted chip, or a vehicle-mounted unit that is built in a vehicle as one or more parts or units. The vehicle may implement the method in this application via the built-in vehicle-mounted module, vehicle-mounted assembly, vehicle-mounted part, vehicle-mounted chip, or vehicle-mounted unit.

In embodiments of this application, a communication apparatus configured to implement functions of the terminal device may be a terminal device, or may be an apparatus that can support the terminal device in implementing the function. For example, the apparatus may be a chip system, and is installed in the terminal device. For ease of description, in embodiments of this application, an example in which the apparatus configured to implement the functions of the terminal device is a terminal device is used for describing the technical solutions provided in embodiments of this application.

In embodiments of this application, the network device may be an access device through which the terminal device accesses a mobile communication system in a wireless manner, for example, includes an access network (access network, AN) device, for example, a base station. The network device may alternatively be a device that communicates with the terminal device over an air interface. The network device may include an evolved NodeB (evolved NodeB, eNB/e-NodeB) in an LTE system or a long term evolution-advanced (long term evolution-advanced, LTE-A) system. The network device may alternatively include a next generation NodeB (next generation NodeB, gNB) in an NR system. The network device may alternatively include an access node or the like in a wireless-fidelity (wireless-fidelity, Wi-Fi) system. The network device may alternatively be a station (station), a relay station, a vehicle-mounted device, a future evolved public land mobile network (Public Land Mobile Network, PLMN) device, a device in a D2D network, a device in an M2M network, a device in an internet of things IoT network, a network device in a PLMN network, or the like. A specific technology and a specific device form that are used by the network device are not limited in embodiments of this application.

In addition, the base station may include a central unit (central unit, CU) and a distributed unit (distributed unit, DU), and a plurality of DUs may be controlled by one CU in a centralized manner. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, such as a radio link control (radio link control, RLC) layer and a medium access control (medium access control, MAC) layer, are set on the DU. It should be noted that, such protocol layer division is merely an example, and division may be performed at another protocol layer. A radio frequency apparatus may be remotely deployed and not placed in the DU, or may be integrated into the DU, or may be partially remotely deployed and partially integrated into the DU. This is not limited in embodiments of this application. In addition, in some embodiments, a control plane (control plane, CP) and a user plane (user plane, UP) of the CU may alternatively be separated and divided into different entities for implementation, where the entities are respectively a control-plane CU entity (CU-CP entity) and a user-plane CU entity (CU-UP entity). The control plane CU-CP of the CU further includes an architecture for further division, that is, an existing CU-CP is further divided into a CU-CP 1 and a CU-CP 2. The CU-CP 1 includes various radio resource management functions, and the CU-CP 2 includes only a radio resource control (radio resource control, RRC) function and a PDCP-C function (namely, a basic function of control plane signaling at the PDCP layer).

In embodiments of this application, a communication apparatus configured to implement functions of the network device may be a network device, or may be an apparatus that can support the network device in implementing the function. For example, the apparatus is a chip system, and is installed in the network device. For ease of description, in embodiments of this application, an example in which the apparatus configured to implement the functions of the network device is a network device is used for describing the technical solutions provided in embodiments of this application.

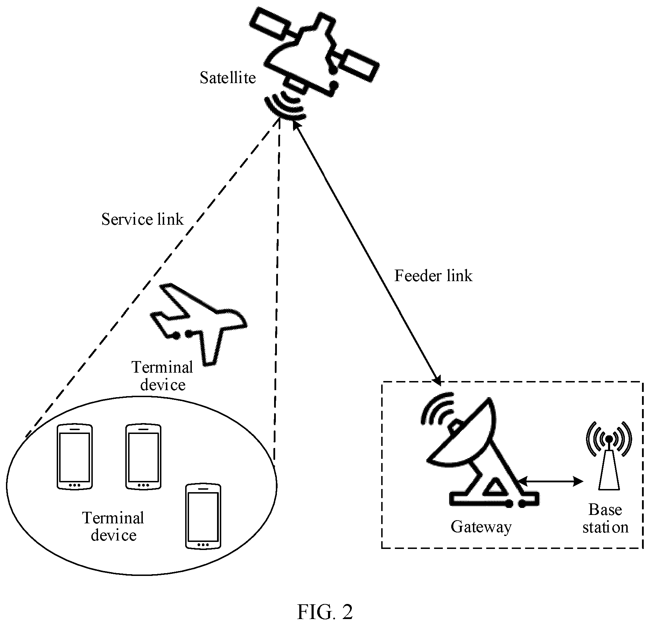

In another example, FIG. 2 is a diagram of a network architecture of another communication system to which an embodiment of this application is applicable. The communication system includes a satellite, a terminal device, and a gateway. The satellite may be a highly elliptical orbit (highly elliptical orbit, HEO) satellite, a geostationary earth orbit (geosynchronous earth orbit, GEO) satellite, a medium earth orbit (medium earth orbit, MEO) satellite, or a low earth orbit (low-earth orbit, LEO) satellite. In addition, an NTN system may further include a high-altitude platform station (high-altitude platform station, HAPS) and the like. This is not limited herein. The gateway (also referred to as a ground station, an earth station, a signal gateway station, or a gateway station) (gateway) may be configured to connect a satellite and a terrestrial base station. One or more satellites may be connected to one or more terrestrial base stations through one or more gateways. This is not limited herein. The terminal device includes, for example, a mobile phone, an airplane, and the like (which is used as an example in FIG. 2). A link between the satellite and the terminal device is referred to as a service link (service link), and a link between the satellite and the gateway is referred to as a feeder link (feeder link).

An operation mode of the satellite is not limited in embodiments of this application. For example, the operation mode of the satellite may be a transparent (transparent) mode, or may be a regenerative (regenerative) mode.

In the transparent transmission mode, the satellite, as an analog radio frequency repeater, has a relay forwarding function, can implement radio frequency conversion and amplification, and can transparently transmit or replicate a signal between the base station and the terminal device. For example, a signal sent by the terminal device may be transparently transmitted via the satellite, and forwarded by the gateway to the terrestrial base station. The gateway has a part or all of functions of the base station. In this case, the gateway may be considered as a base station. It may be considered that the gateway and the base station may be deployed together or may be separately deployed. If the gateway and the base station are separately deployed, a delay of the feeder link includes a delay from the satellite to the gateway and a delay from the gateway to the base station.

In the regenerative mode, the satellite, as a base station for wireless communication, has a part or all of functions of the base station, implements regeneration of signals received from the ground, and may understand and process these signals. For example, the satellite may be a base station mounted on an artificial earth satellite or a high-altitude aircraft. For example, the base station may be an evolved NodeB (eNB) or a 5G base station (gNB). The gateway may forward signaling between the satellite (namely, the base station) and a core network.

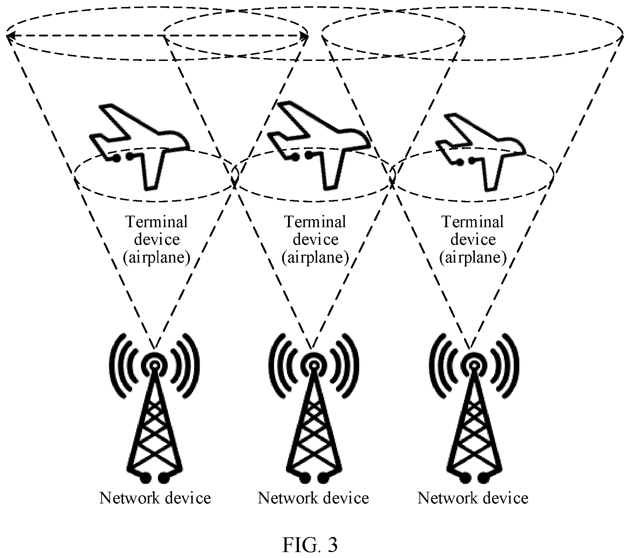

It may be understood that, embodiments of this application are also applicable to an air-to-ground (air-to-ground, ATG) communication system. In an example, FIG. 3 is a diagram of a network architecture of still another communication system to which an embodiment of this application is applicable. The communication system includes at least one network device and at least one high-altitude terminal device, for example, a high-altitude airplane and an on-board terminal device.

A satellite data processing capability and transmit power of a satellite device are limited due to manufacturing and launch costs. Specifically, the satellite device is an energy and power limited device, and is sensitive to satellite power efficiency, that is, power efficiency of the satellite device is expected to be improved as much as possible. In both terrestrial cellular network communication and NTN communication, a high power amplifier (high power amplifier, HPA) at a transmit end is required to operate near a linear saturation area, to improve power efficiency of the HPA.

If the system performs data transmission by using an orthogonal frequency division multiplexing (orthogonal frequency division multiplexing, OFDM) waveform or a waveform having a high PAPR characteristic, a high PAPR occurs. Because a PAPR of an OFDM signal is large, when the HPA operates near a saturation point, there is a specific probability that a signal that is input to the HPA enters a non-linear area, and this generates non-linear distortion occurs. The non-linear distortion introduces in-band distortion and out-of-band radiation. This not only affects decoding accuracy of a receive end, but also brings interference to a user on an adjacent channel. Therefore, power back-off can be performed on the signal that is input to the HPA, and non-linear distortion of the HPA is reduced as much as possible. Performing the power back-off on the signal that is input to the HPA may be understood as reducing power of the signal that is input to the HPA. Although performing the power back-off on the signal that is input to the HPA may reduce the non-linear distortion of the HPA, power of a signal output by the HPA is reduced. This reduces transmit power and the power efficiency of the HPA, and further reduces signal receiving power of the receive end and reduces a signal-to-noise ratio of the receive end. Therefore, a TR technology is proposed to suppress the PAPR of the OFDM waveform and PAPRs of other waveforms. The TR technology may be understood as reserving a part of reserved carriers as carriers for suppressing the PAPR, and signals or energy for suppressing the PAPR are carried on the reserved carriers. The reserved carriers used for suppressing the PAPR may include a plurality of subcarriers, or a set formed by the subcarriers may be referred to as a carrier set. A pattern (pattern) formed by subcarrier numbers respectively corresponding to the subcarriers included in the carrier set is referred to as a TR pattern (TR pattern), that is, the TR pattern may indicate a set of reserved carriers for suppressing the PAPR.

It may be understood that, the reserved carriers used for suppressing the PAPR are reserved at a transmit end, to carry the signals for suppressing the PAPR, and a part of carriers other than the reserved carriers are used for carrying data signals. Certainly, to improve spectral efficiency, the data signal may also be carried on the reserved carrier, that is, the reserved carrier may carry both the signal for suppressing the PAPR and the data signal. Optionally, a carrier set carrying the signals for suppressing the PAPR does not overlap a carrier set carrying the data signals (this is used as an example in this specification). When demodulating information received from the transmit end, the receive end may skip or remove the reserved carrier used for suppressing the PAPR, that is, may not decode the signal that is used for suppressing the PAPR and that is on the reserved carrier. A principle of suppressing the PAPR based on the TR pattern is a conventional technology. Details are not described herein.

Because a part of original resources used for the data transmission are used as the reserved carriers, a quantity of resources that can be actually used for the data transmission decreases, and decoding performance of the receive end is reduced. Therefore, in embodiments of this application, based on the original resources, some resources that can be used for sending data are added. This is equivalent to a case in which in addition to the original resources, resources used for sending the data further includes the added resources. Therefore, a quantity of resources that can be actually used for the data transmission increases. In this way, degradation of the decoding performance of the receive end is reduced as much as possible.

A form of the data transmission is not limited in embodiments of this application. For example, the data transmission may be PDCCH transmission, or may be physical downlink shared channel (physical downlink shared channel, PDSCH) transmission. For ease of description, the PDCCH transmission is used as an example in embodiments of this application. For ease of understanding, concepts related to PDCCH resources are first described.

The network device configures, for the terminal device, resource information for performing blind detection on a PDCCH. The resource information may include information about a search space (search space, SS) and a control resource set (control resource set, CORESET). The terminal device may determine, based on a CORESET and an SS of the PDCCH, a candidate PDCCH resource set corresponding to each AL, to determine, from the candidate PDCCH resource set, a resource to be used by the network device for sending the PDCCH.

The CORESET may specify a frequency domain position of the PDCCH and a quantity of time domain symbols. The CORESET occupies $N_{RB}^{CORESET}$ physical resource blocks (physical resource blocks, PRBs) in frequency domain, and one PRB group includes six consecutive resource blocks (resource blocks, RBs). The network device may indicate frequency domain resources in the CORESET by using a bitmap (bitmap), and one bit in the bitmap corresponds to one PRB group. For example, 0 indicates that a corresponding frequency domain resource cannot be used for the PDCCH transmission, and 1 indicates that a corresponding frequency domain resource can be used for the PDCCH transmission. A most significant bit in the bitmap indicates a PRB group with a lowest frequency, that is, the bitmap provides an indication in ascending order of indexes of PRB groups.

A quantity of time domain symbols $N_{Symb}^{CORESET}$ occupied by the PDCCH in time domain may be 1, 2, or 3. Different CORESET index numbers (identifiers) may be preconfigured for CORESETs. In this way, different control resource sets may be distinguished based on the CORESET index numbers. For example, if there are a control resource set 1 and a control resource set 2, a CORESET index number of the control resource set 1 may be set to p1, and a CORESET index number of the control resource set 2 may be set to p2. The network device may indicate a corresponding CORESET based on the CORESET index number.

A maximum of three CORESETs are configured for each bandwidth part (bandwidth part, BWP). Because a maximum of four BWPs are configured for each cell, a maximum of 12 CORESETs may be configured for each cell, and indexes of the CORESETs are 0 to 11. The network device may notify, by using a higher-layer parameter ControlResourceSetId, of a CORESET index number used by the terminal device. ControlResourceSetId is unique in all BWPs in a cell. A CORESET 0 is dedicated to a Type 0 PDCCH common search space (common search space, CSS).

An AL is a quantity of control channel elements (control channel elements, CCEs) used for the PDCCH. For example, if the PDCCH includes four CCEs, an aggregation level of the PDCCH is 4. The AL of the PDCCH may be 1, 2, 4, 8, or 16. One CCE includes six resource element groups (Resource element groups, REGs). One REG occupies one RB in frequency domain, and occupies one orthogonal frequency division multiplexing (Orthogonal Frequency Division Multiplexing, OFDM) symbol in time domain. A mapping manner of a PDCCH resource is as follows: The REGs form a REG bundle in a time-first (time-first) mapping manner, and then are mapped to a control resource of CCE in an interleaving or non-interleaving manner at a granularity of the REG bundle. One REG bundle includes a group of consecutive REGs in time domain and/or the frequency domain.

The search space is divided into a common search space and a dedicated search space. A DMRS of a PDCCH in a common search space in each BWP and a DMRS of a PDCCH in a dedicated search space in each BWP are fixed on subcarriers with PRB sequence numbers of 1, 5, and 9.

The network device may indicate, to the terminal device by using signaling nrofCandidates carried in the search space, a quantity of PDCCH candidate sets (or a quantity of candidate PDCCHs) corresponding to each AL. If the network device does not configure a nrofCandidates parameter, the network device determines quantities of PDCCH candidate sets corresponding to different ALs in an agreed manner. When detecting the PDCCH, the terminal device does not learn of an AL used by the network device. Therefore, the terminal device needs to perform blind detection on a possible AL. To be specific, the terminal device may determine, based on the received CORESET and the received SS, the PDCCH candidate sets corresponding to each AL. The PDCCH candidate sets form a PDCCH search space blind detection set.

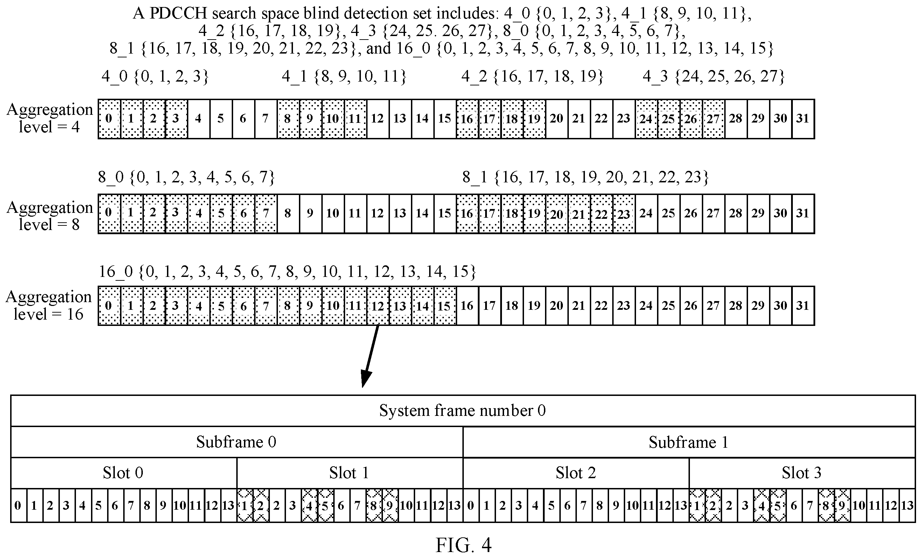

For example, FIG. 4 is a diagram of a PDCCH search space blind detection set. In FIG. 4, an example in which the AL is {4, 8, 16} and there are 32 CCEs is used. In FIG. 4, a sequence number of the CCE starts from 0. As shown in FIG. 4, when the AL = 4, each PDCCH candidate set includes four CCEs, and the PDCCH search space blind detection set is a PDCCH candidate set 0 to a PDCCH candidate set 3 (namely, 0 {0, 1, 2, 3} to 3 {24, 25, 26, 27} in FIG. 4). When the AL = 8, each PDCCH candidate set includes eight CCEs, and the PDCCH search space blind detection set is a PDCCH candidate set 0 to a PDCCH candidate set 1 (namely, 0 {0, 1, 2, 3, 4, 5, 6, 7} and 1 {16, 17, 18, 19, 20, 21, 22, 23} in FIG. 4). When the AL = 16, each PDCCH candidate set includes 16 CCEs, and the PDCCH search space blind detection set is a PDCCH candidate set 0 (namely, 0 {0, 1, 2, 3, 4, 5, 6, 7, 8, 9, 10, 11, 12, 13, 14, 15} in FIG. 4). In FIG. 4, an example in which a periodicity of PDCCH blind detection is two slots (slots) is used. As shown in FIG. 4, an example in which a time domain resource is four slots (namely, a slot 0 to a slot 3) is used. The slot 0 and a slot 1 are located in a subframe 0, a slot 2 and the slot 3 are located in a subframe 1, and the subframe 0 and the subframe 1 are located in a frame whose system frame number is 0. The terminal device may blindly detect the PDCCH in the slot 1 and the slot 3. Each slot has three PDCCH positions, and each PDCCH occupies two symbols (symbols). For example, blind detection is performed on the PDCCH on the slot 1, and one slot includes a symbol 0 to a symbol 13. The terminal device may perform blind detection on the PDCCH on the symbol 0 and a symbol 1, a symbol 4 and a symbol 5, and a symbol 8 and a symbol 9. In other words, a first symbol of the PDCCH includes the symbol 0, the symbol 4, and the symbol 8.

The following describes the technical solutions provided in embodiments of this application with reference to accompanying drawings.

According to the communication method provided in embodiments of this application, the method may be applied to any communication system, provided that a transmit end communicates with a receive end. In the following descriptions, the communication method is applied to any communication system shown in FIG. 1 to FIG. 3. The communication method provided in embodiments of this application may be applied to uplink transmission, or may be applied to downlink transmission. It should be understood that, the uplink transmission and the downlink transmission are relative. For example, if transmission from a first communication apparatus to a second communication apparatus is the uplink transmission, transmission from the second communication apparatus to the first communication apparatus is the downlink transmission. In embodiments of this application, data transmission is performed not limited to using an OFDM waveform. For example, the data transmission may alternatively be performed by using a DFT-S-OFDM waveform. That is, DFT precoding is first performed on data, and then data obtained through precoding is mapped to a frequency domain data subcarrier.

A type of a reference signal is not limited in embodiments of this application. For example, the reference signal may be a phase-tracking reference signal (Phase-tracking reference signal, PTRS), a demodulation reference signal (demodulation reference signal, DMRS), a channel state information-reference signal (channel state information-reference signal, CSI-RS), a tracking reference signal (tracking reference signal, TRS), or a sounding reference signal (sounding reference signal, SRS). In the following descriptions, "when" and "in a case of" belong to a same concept, and is interchangeable unless otherwise specified.

A REG in embodiments of this application includes at least one RB, and a quantity of RBs included in different REGs may be the same or different. The RB may be a PRB. A CCE includes a plurality of resource element groups, and a quantity of resource element groups corresponding to one CCE may be fixed, for example, may be 4 or 6. One resource element group may occupy S consecutive subcarriers in frequency domain, and/or occupy T consecutive OFDM symbols in time domain, were S is a natural number greater than or equal to 1. For example, one resource element group may occupy 12 consecutive subcarriers in frequency domain, and may occupy one OFDM symbol in time domain, where S = 12, and T = 1.

In embodiments of this application, subcarrier sequence numbers, RB sequence numbers, PRB sequence numbers, CCE sequence numbers, REG sequence numbers, REG bundle sequence numbers, resource sequence numbers, and the like may be sorted in ascending or descending order in frequency domain and/or time domain, or may be sorted in a logical order. For example, the logical order is for performing interleaving and/or reordering in frequency domain and/or time domain resources, and then the subcarrier sequence numbers, the RB sequence numbers, the PRB sequence numbers, the CCE sequence numbers, the REG sequence numbers, the REG bundle sequence numbers, the resource sequence numbers, and the like are marked. That is, sequence numbers in the logical order no longer sequentially increase or decrease in frequency domain and/or time of physical resources. It may be understood that, the interleaving and/or reordering on the frequency domain and/or time domain resources may improve a gain of frequency domain and/or time diversity.

In embodiments of this application, unless otherwise specified, a quantity of nouns indicates "singular nouns or plurals noun", namely, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of a plurality of items (pieces). For example, at least one item (piece) of a, b, or c indicates a, b, c, a and b, a and c, b and c, or a, b, and c, where a, b, and c may be singular or plural.

Ordinal numbers, such as "first" and "second", mentioned in embodiments of this application are used for distinguishing between a plurality of objects, but are not intended to limit sizes, content, orders, time sequences, application scenarios, priorities, importance, and the like of the plurality of objects. For example, a "first AL" and a "second AL" indicate that there are two ALs, but do not indicate that priorities, importance, and the like of the two ALs are different.

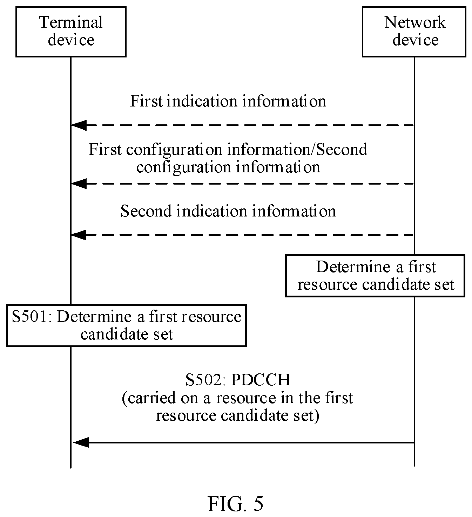

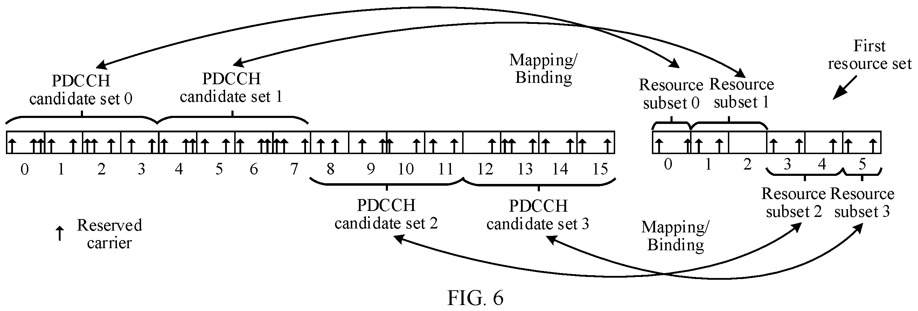

FIG. 5 is a schematic flowchart of a communication method according to an embodiment of this application. The method may be performed by a first communication apparatus and a second communication apparatus. The first communication apparatus may be a terminal device, a chip arranged in the terminal device, or another part configured to implement functions of the terminal device. The second communication apparatus may be a network device, a chip arranged in the network device, or another part configured to implement functions of the network device. The network device may be a satellite. In the method provided in this embodiment of this application, an example in which the second communication apparatus sends data to the first communication apparatus is used. For example, the second communication apparatus sends a PDCCH or a PDSCH to the first communication apparatus. For ease of description, the following uses an example in which the first communication apparatus is the terminal device, the second communication apparatus is the network device, and the network device sends a PDCCH to the terminal device. It should be noted that, in this embodiment of this application, positions of reserved carriers in FIG. 6 to FIG. 10 are merely examples, and specific positions and a quantity of reserved carriers are not limited. A data subcarrier mentioned in this embodiment of this application is a subcarrier used for carrying the data.

S501: The terminal device determines a first resource candidate set.

S502: The terminal device receives the PDCCH on the first resource candidate set; and correspondingly, the network device sends the PDCCH on the first resource candidate set.

A resource in the first resource candidate set may be used for carrying the PDCCH, and the first resource candidate set belongs to a PDCCH search space blind detection set. In this embodiment of this application, the PDCCH search space blind detection set is a set of at least one PDCCH candidate set that corresponds to each AL and that is determined by the terminal device based on a CORESET, an SS, and a tone reservation pattern. If the reserved carrier is not considered, the terminal device may determine, based on the CORESET and the SS, a set of PDCCH candidate sets corresponding to each AL. For differentiation, in this embodiment of this application, a PDCCH candidate set determined by the terminal device based on a CORESET, an SS, and a tone reservation pattern is referred to as a resource candidate set, and a PDCCH candidate set determined by the terminal device based on the CORESET and the SS is referred to as a PDCCH candidate set. A manner in which the terminal device determines each resource candidate set is the same. In this embodiment of this application, an example in which the terminal device determines the first resource candidate set is used.

In consideration of the reserved carrier, each determined resource candidate set in this embodiment of this application may ensure that a quantity of subcarriers actually used for carrying the data does not decrease due to the reserved carrier, to improve decoding performance of the terminal device. In an example of the first resource candidate set, the first resource candidate set includes X subcarriers, and at least one reserved subcarrier is included between a $1^{st}$ subcarrier in the X subcarriers and a last subcarrier in the X subcarriers. In this case, a difference between a sequence number A1 of the $1^{st}$ subcarrier and a sequence number A2 of the last subcarrier is greater than X, where X, A1, and A2 are all positive integers. This is equivalent to a case in which a quantity of data subcarriers included in the first resource candidate set is not less than a quantity of data subcarriers when a TR technology is not used. In this way, the decoding performance of the terminal device can be ensured even if the TR technology is used.

A specific quantity of subcarriers included in the first resource candidate set may be determined based on the tone reservation pattern. In general, in the X subcarriers included in the first resource candidate set, except the reserved carrier, a quantity of remaining subcarriers that can be used for carrying the data is not less than a quantity of subcarriers used for carrying the data when the TR technology is not used. For ease of understanding, an example in which the first resource candidate set corresponds to a first AL is used. The first resource candidate set may be divided into two parts, namely, a first part and a second part. The first part may be a PDCCH candidate set corresponding to the first AL, the second part may be considered as a newly added subcarrier set relative to the PDCCH candidate set, and the second part includes at least one subcarrier. A quantity of subcarriers used for carrying the data and included in the second part is greater than or equal to a quantity of reserved carriers in the first part. In this way, it is ensured as much as possible that a quantity of subcarriers used for carrying the data in the first resource candidate set does not decrease due to existence of the reserved carrier.

The second part and the first part may be consecutive, or the second part and the first part may not be consecutive. This is not limited in this embodiment of this application. That the second part and the first part are consecutive means that a sequence number of a 1st subcarrier in the second part and a sequence number of a last subcarrier in the first part are consecutive. That the second part and the first part are not consecutive means that the sequence number of the 1st subcarrier in the second part and the sequence number of the last subcarrier in the first part are not consecutive, and the second part and the first part are spaced by another subcarrier. For example, the first part of the first resource candidate set and the second part of the first resource candidate set are spaced by a part of subcarriers in a second resource candidate set, and an AL corresponding to the second resource candidate set is the same as the AL corresponding to the first resource candidate set.

The following describes implementations of each resource candidate set.

Implementation 1: A second part of each resource candidate set and a first part of each resource candidate set are not consecutive.

In this implementation, a first resource set may be (pre)configured, and second parts of candidate sets belong to the first resource set. For example, the network device may send first configuration information to the terminal device, where the first configuration information indicates the first resource set. The first configuration information may be a bitmap indicating at least one PRB group, and one bit in the bitmap corresponds to one PRB group. A most significant bit in the bitmap indicates a PRB group with a lowest frequency, that is, the bitmap provides an indication in ascending order of indexes of PRB groups. It should be noted that, a size of a resource indicated by the bit configured in the first configuration information is not limited in this embodiment of this application. For example, the bit in the first configuration information may alternatively indicate at least one consecutive RB, at least one consecutive CCE, at least one consecutive REG, or at least one consecutive REG bundle (bundle). For example, the bit indicates a group of six consecutive RBs.

For any resource candidate set, the network device may configure, by using signaling, a parameter, for example, the CORESET, the SS, and/or a parameter nrofCandidates in the SS, used for determining a first part of the resource candidate set. The terminal device may determine the first part of the resource candidate set based on the parameter configured by the network device. After determining the first part, the terminal device may determine, based on a quantity of reserved carriers included in the first part, a quantity of subcarriers included in a second part, and then determine, from the first resource set, the subcarriers included in the second part.

For example, FIG. 6 shows a plurality of resource candidate sets corresponding to an AL of 4. FIG. 6 shows a resource with a length of 16 CCEs and the first resource set. The AL = 4, the 16 CCEs correspond to four PDCCH candidate sets (namely, a PDCCH candidate set 0 to a PDCCH candidate set 3), and each of the PDCCH candidate sets includes four CCEs. One PDCCH candidate set is a first part of one resource candidate set. For example, the first part of the first resource candidate set is the PDCCH candidate set 0, a first part of the second resource candidate set is the PDCCH candidate set 1, a first part of a third resource candidate set is the PDCCH candidate set 2, and a first part of a fourth resource candidate set is the PDCCH candidate set 3. Second parts of the resource candidate sets belong to the first resource set. For example, the second part of the first resource candidate set is a resource subset 0. Similarly, a second part of the second resource candidate set is a resource subset 1, a second part of the third resource candidate set is a resource subset 2, and a second part of the fourth resource candidate set is a resource subset 3.

In an example of the first resource candidate set, the terminal device may determine the first resource candidate set based on the tone reservation pattern included in the first resource candidate set. Alternatively, it may be considered that the terminal device may determine the second part of the first resource candidate set based on a tone reservation pattern included in the first part of the first resource candidate set. The terminal device determines the first part of the first resource candidate set based on the parameter, for example, the CORESET, the SS, and/or nrofCandidates, configured by the network device, and then determines the first resource candidate set based on the second part. Finally, the quantity of subcarriers used for carrying the data in the second part may not be less than the quantity of reserved carriers included in the first part.

For example, a reference signal density is 1/4, that is, a reference signal is placed on one subcarrier in every four subcarriers. Assuming that the quantity of reserved carriers in the first part (namely, the PDCCH candidate set 0) is y, the second part (namely, the resource subset 0) includes [y/9] or [y/12] RBs, where [·] indicates rounding up. For example, the quantity of reserved carriers included in the PDCCH candidate set 0 is 58, and the resource subset 0 occupies [58/9] = 7 RBs.

Optionally, the quantity of subcarriers used for carrying the data in the second part of the first resource candidate set is less than the quantity of reserved carriers included in the first part of the first resource candidate set. For example, when the network device configures a small quantity of resources in the first resource set for the terminal device, a quantity of subcarriers used for carrying the data in the first resource set is less than the quantity of reserved carriers included in the first part. In this case, the terminal device determines, based on a quantity of resources in the first resource set, the quantity of subcarriers included in the second part of the first resource candidate set. Finally, the quantity of subcarriers used for carrying the data in the second part may be less than the quantity of reserved carriers included in the first part. Although the quantity of subcarriers used for carrying the data in the second part may be less than the quantity of reserved carriers included in the first part, a total quantity of data subcarriers included in the first resource candidate set is greater than a quantity of data subcarriers when only the TR technology is used. Therefore, PDCCH decoding performance is still better than PDCCH decoding performance when only a TR solution is used.

Optionally, if the first resource set includes the reserved carrier, impact of the reserved carrier and/or the reference signal may be considered when the quantity of subcarriers included in the second part is determined, so that the quantity of subcarriers used for carrying the data in the first resource candidate set is greater than or equal to a quantity of data subcarriers included in the PDCCH candidate set 0 when TR is not used. For example, if nine REs are left after the reference signal is removed from one RB in the PDCCH candidate set 0, the second part may occupy [y/9] RBs. When the impact of the reserved carrier is considered, the reserved carrier may be removed. For example, [y/9] indicates two RBs. After the reserved carrier is removed, if a quantity of REs carrying the data on the two RBs is less than y, the second part may occupy [y/9] + 1 RBs, namely, three RBs. After the reserved carrier is removed from the three RBs, if a quantity of remaining REs carrying the data is greater than or equal to y, the second part occupies [y/9] + 1 RBs. On the contrary, after the reserved carrier is removed from the three RBs, if a quantity of remaining REs actually carrying the data is less than y, the second part occupies [y/9] + 2 RBs, namely, four RBs. After the reserved carrier is removed from the four RBs, if a quantity of remaining REs carrying the data is less than y, the second part occupies [y/9] + 3 RBs. This can be deduced by analogy, until a quantity of REs that can actually carry the data in the second part is greater than or equal to y.

After the quantity of subcarriers included in the second part is determined, the second part may be determined from the first resource set according to a specific rule. For example, it may be pre-agreed that a mapping order of the first part and the second part that are of each resource candidate set is an ascending order or a descending order of frequency sequence numbers or resource sequence numbers. For example, the example in FIG. 6 is still used. In FIG. 6, an example in which the mapping order of the first part and the second part is an ascending order of CCE sequence numbers and RB sequence numbers is used. The PDCCH candidate set 0 corresponds to the resource subset 0; the PDCCH candidate set 1 corresponds to the resource subset 1; the PDCCH candidate set 2 corresponds to the resource subset 2; and the PDCCH candidate set 3 corresponds to the resource subset 3. Certainly, the second part may alternatively be sequentially mapped first in a time domain order and then in a frequency domain order. For example, mapping is performed in ascending order of RE sequence numbers. If the second part of the first resource candidate set occupies 58 REs, the resource subset 0 is an RE 0 to an RE 57 in the first resource set. The second part of the second resource candidate set occupies 43 REs, and the resource subset 1 is an RE 58 to an RE 100 in the first resource set.

It should be noted that, a mapping manner of the first part and the second part that are of each resource candidate set is not limited in this embodiment of this application. For example, a second part corresponding to a PDCCH candidate set for the terminal device to perform blind detection may be first mapped in ascending order of frequencies, and then a second part corresponding to another possible PDCCH candidate set is mapped. In this way, the second part used by the terminal device can be more centralized, and it is convenient for the network device to perform scheduling and multiplexing. For another example, the subcarriers in the first resource set may be numbered after interleaved mapping processing is performed on the subcarriers, and then the subcarrier is mapped to each PDCCH candidate set based on the numbering and according to a specific rule. In this way, a frequency diversity gain can be increased.

It can be learned from FIG. 6 that, a quantity of subcarriers that can be actually used for carrying the data in the first part (for example, the PDCCH candidate set 0) decreases due to the reserved carriers. However, in this embodiment of this application, in addition to the PDCCH candidate set 0, the data is further carried by using the subcarriers in the second part (namely, the resource subset 0). Therefore, finally, a quantity of subcarriers that can be actually used for carrying the data does not decrease, but even increases. In this way, the decoding performance of the terminal device can be improved.

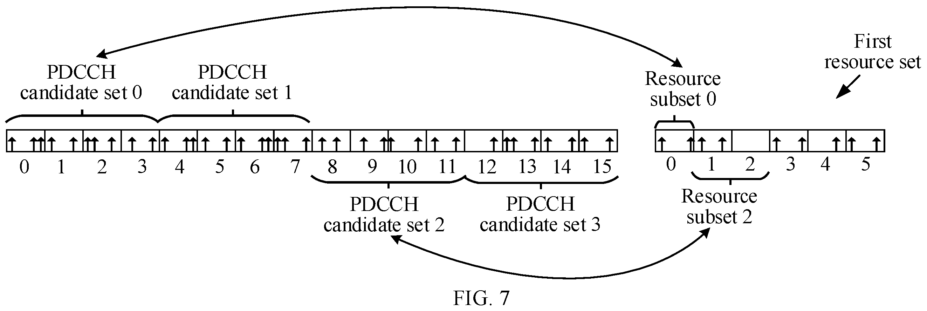

Refer to FIG. 7. An example of a resource candidate set for one terminal device to perform blind detection is used. FIG. 7 shows a resource candidate set for one terminal device to perform blind detection by using an example in which the AL = 4. The PDCCH candidate set for the terminal device to perform blind detection is a PDCCH candidate set 0 and a PDCCH candidate set 2. The PDCCH candidate set 0 is a CCE 0 to a CCE 3, and the PDCCH candidate set 2 is a CCE 8 to a CCE 11. The PDCCH candidate set 0 is mapped to a resource subset 0 (namely, a resource 0 in the first resource set), that is, the PDCCH candidate set 0 and a resource subset 0 form one resource candidate set. Similarly, the PDCCH candidate set 2 is mapped to a resource subset 2 (namely, a resource 1 and a resource 2 in the first resource set), that is, the PDCCH candidate set 2 and the resource subset 2 form one resource candidate set. The terminal device receives the PDCCH on the PDCCH candidate set 0 and the resource subset 0, and receives the PDCCH on the PDCCH candidate set 2 and the resource subset 2.

According to the solution provided in this embodiment of this application, a quantity of data subcarriers included in each resource candidate set is not less than the quantity of data subcarriers when the TR technology is not used. In this way, the PDCCH decoding performance is improved as much as possible.

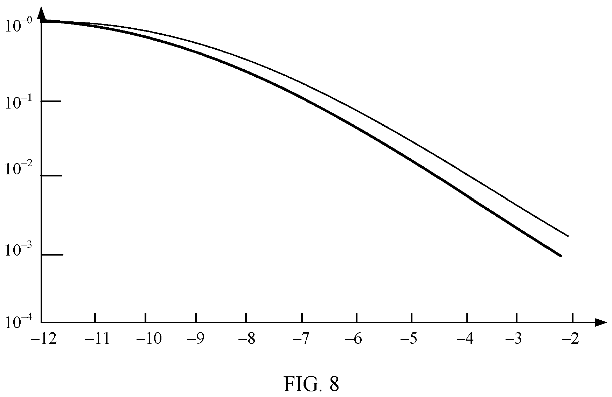

For ease of understanding, FIG. 8 shows PDCCH decoding performance corresponding to PDCCHs received by the terminal device on PDCCH candidate sets and resource candidate sets. In FIG. 8, a horizontal coordinate indicates a signal-to-noise ratio (signal-to-noise ratio, SNR), and a vertical coordinate indicates a block error rate. A bold line in FIG. 8 indicates a block error rate of PDCCH decoding corresponding to the PDCCHs received by the terminal device on the resource candidate sets (for example, the PDCCH candidate set 0 and the resource subset 0). A thin line in FIG. 8 indicates a block error rate of PDCCH decoding corresponding to the PDCCH received by the terminal device on the PDCCH candidate set (for example, the PDCCH candidate set 0). It can be learned from FIG. 8 that, in this embodiment of this application, subcarriers occupied by the reserved carriers are compensated for by using subcarriers in the first resource set. In this way, the decoding performance of the terminal device can be improved.

For example, the terminal device determines, based on the quantity of reserved carriers included in the first part, the quantity of subcarriers included in the second part. In an alternative implementation, the network device may notify the terminal device that a quantity of subcarriers included in a second part of each resource candidate set corresponding to each AL does not need to be determined by the terminal device through calculation. In this way, processing complexity of the terminal device is reduced. For example, the network device may send first indication information to the terminal device; and correspondingly, the terminal device receives the first indication information sent by the network device. The first indication information may indicate a quantity of subcarriers included in the second part corresponding to each of a plurality of resource candidate sets corresponding to the AL corresponding to the first resource candidate set.

For example, the network device may configure, for the terminal device, a mapping relationship between a quantity of resources included in the first part of each of the plurality of resource candidate sets corresponding to each AL and a quantity of resources included in the second part of each of the plurality of resource candidate sets corresponding to each AL. Table 1 shows a mapping relationship between four PDCCH candidate sets corresponding to one AL and the quantity of resources included in the second part. In Table 1, an example in which the resource included in the second part is at a granularity of an RB is used. The network device may indicate, to the terminal device based on the first indication information, content shown in Table 1. Alternatively, the network device may send, to the terminal device based on the first indication information, content described in Table 1. As shown in FIG. 6, the terminal device determines, based on the first indication information, a quantity of resources included in a second part corresponding to a PDCCH candidate set for which blind detection is performed, and then determines a corresponding resource candidate set based on a mapping relationship between the PDCCH candidate set and the second part. It should be noted that, the quantity of resources in Table 1 is merely an example.

Table 1

| PDCCH candidate set | Quantity of resources included in the second part |
|---|---|
| PDCCH candidate set 0 | 1 |
| PDCCH candidate set 1 | 2 |
| PDCCH candidate set 2 | 2 |
| PDCCH candidate set 3 | 1 |

It should be noted that, in Table 1, an example in which the mapping relationship between the quantity of resources included in the first part of the resource candidate set and the quantity of resources included in the second part of the resource candidate set is used. In a possible implementation, a mapping relationship between the first part of the resource candidate set and the second part of the resource candidate set, for example, a mapping relationship between index numbers of RBs or REs of the first part and the second part, may alternatively be configured. Optionally, a specific resource candidate set may not include a second part, that is, a quantity of resources in the second part of the specific resource candidate set is 0.

In FIG. 6, an example in which the network device separately configures the first resource set is used. In a possible implementation, the first resource set may be a part of resources in available frequency domain resources in the CORESET or the set of the PDCCH candidate sets configured by the network device. In other words, the resources configured by the network device for the terminal device are divided into two parts. One part is used for determining the PDCCH candidate set, and the other part is used as the first resource set. In this case, the network device does not need to separately configure the first resource set, so that signaling overheads can be reduced.

For example, the network device may send second configuration information to the terminal device; and correspondingly, the terminal device receives the second configuration information from the network device, where the second configuration information may indicate u PRB groups as the CORESET, and u is a positive integer. The first resource set may be $\varphi$ PRB groups in the u PRB groups. For example, $\varphi$ = rem(u, v), where rem indicates modulo calculation. v may be a value agreed upon by the network device and the terminal device, or may be configured by the network device. Optionally, v is an AL, that is, the first resource set may be determined based on the AL and u.

Optionally, the $\varphi$ PRB groups are PRB groups with largest sequence numbers in the u PRB groups; or the $\varphi$ PRB groups are PRB groups with smallest sequence numbers in the u PRB groups. In other words, the $\varphi$ PRB groups with the largest sequence numbers in the u PRB groups are selected as the first resource set; or the $\varphi$ PRB groups with the smallest sequence numbers may be selected as the first resource set. Certainly, the $\varphi$ PRB groups may alternatively be selected from the u PRB groups as the first resource set according to another rule.

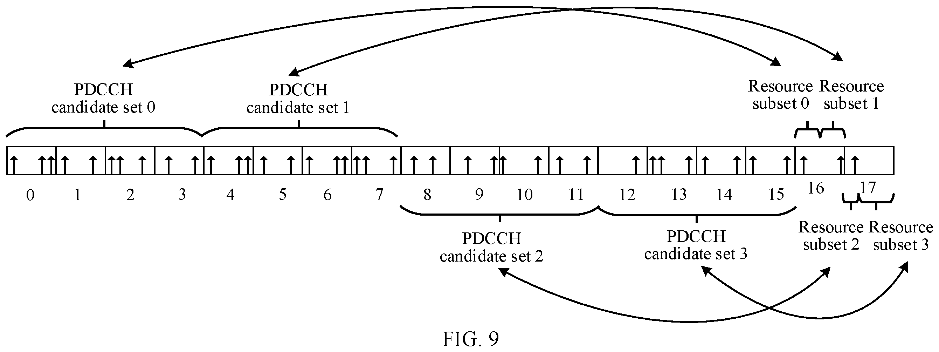

For example, FIG. 9 shows a CORESET with a length of 18 PRB groups. The network device configures the 18 RPB groups for the terminal device as the CORESET. If it is agreed that v is an AL, and v = 4, that is, the AL = 4, a quantity $\varphi$ of PRB groups included in the first resource set is equal to rem(18, 4) = 2. Two PRB groups are selected from the 18 RPB groups as the first resource set. As shown in FIG. 9, the two PRB groups may be two PRB groups with largest sequence numbers in the 18 PRB groups. The first resource set is a set formed by a PRB group 16 and a PRB group 17. A plurality of PDCCH resource sets corresponding to any AL are separately mapped to the first resource set. As shown in FIG. 9, a PDCCH candidate set 0 is mapped to a resource subset 0; a PDCCH candidate set 1 is mapped to a resource subset 1; a PDCCH candidate set 2 is mapped to a resource subset 2; and a PDCCH candidate set 3 is mapped to a resource subset 3.

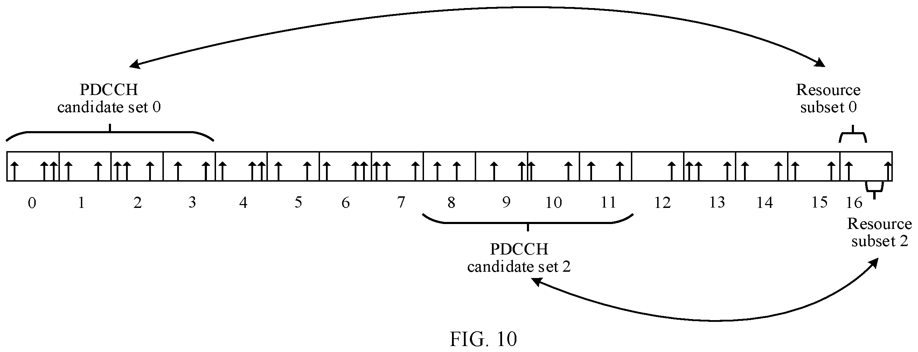

For another example, FIG. 10 shows a resource candidate set for one terminal device to perform blind detection. In FIG. 10, an example in which the network device configures 17 PRB groups for the terminal device as the CORESET is used. If it is agreed that v is an AL, and v = 4, that is, the AL = 4, the terminal device determines one PRB group (for example, a PRB group 16) in the 17 PRB groups as the first resource set based on $\varphi$ = rem(17, 4) = 1. When the PDCCH candidate set for the terminal device is a PDCCH candidate set 0 and a PDCCH candidate set 2, and the PDCCH candidate set 0 is mapped to a resource subset 0 in the PRB group 16, and the PDCCH candidate set 2 is mapped to a resource subset 2 in the PRB group 16. In FIG. 10, an example in which the PDCCH candidate set 0 is a PRB 0 to a PRB 3, and the PDCCH candidate set 2 is a PRB 8 to a PRB 11.

In this embodiment of this application, a second part of a resource candidate set corresponding to a high AL may include a second part of a resource candidate set corresponding to a low AL. For example, the second part of the first resource candidate set includes the second part of the third resource candidate set, and the AL corresponding to the first resource candidate set is higher than an AL corresponding to the third resource candidate set. In other words, a PDCCH candidate set at a high AL includes a set w of PDCCH candidate sets at a low AL, and a second part corresponding to the PDCCH candidate set at the high AL includes second parts corresponding to the PDCCH candidate sets at the low AL in the set w. That is, the second part of the PDCCH candidate set at the high AL is a combination of the second parts of the PDCCH candidate sets at the low AL. In this way, mutual interference between second parts of resource candidate sets at different ALs can be avoided, to improve resource utilization.

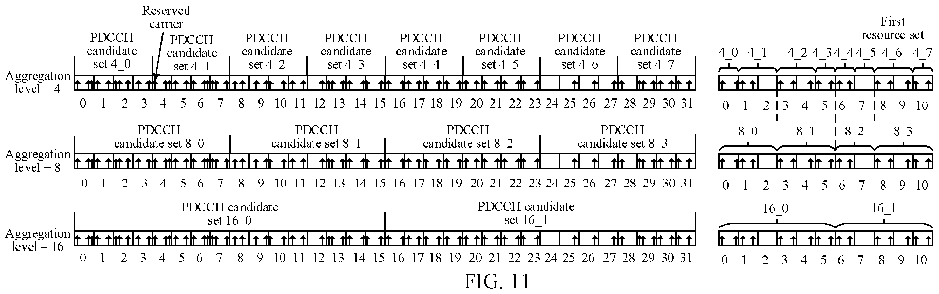

For example, FIG. 11 shows PDCCH candidate sets and first resource sets respectively corresponding to a plurality of ALs (4, 8, and 16). In FIG. 11, an example in which 32 CCEs (namely, a CCE 0 to a CCE 31) are used as the CORSET, and a quantity of resources (namely, a resource 0 to a resource 10) in the first resource set is 11 is used. The AL = 4 corresponds to eight PDCCH candidate sets (namely, a PDCCH candidate set 4_0 to a PDCCH candidate set 4_7). The AL = 8 corresponds to four PDCCH candidate sets (namely, a PDCCH candidate set 8_0 to a PDCCH candidate set 8_3). The AL = 16 corresponds to two PDCCH candidate sets (namely, a PDCCH candidate set 16_0 and a PDCCH candidate set 16_1). The PDCCH candidate set 4_0 to the PDCCH candidate set 4_7 are mapped to a resource 4_0 to a resource 4_7 in the first resource set one by one in ascending order of sequence numbers or frequencies. The PDCCH candidate set 8_0 to the PDCCH candidate set 8_3 are mapped to a resource 8_0 to a resource 8_3 in the first resource set one by one in ascending order of sequence numbers or frequencies. Similarly, the PDCCH candidate set 16_0 and the PDCCH candidate set 16_1 are mapped to a resource 16_0 and a resource 16_1 in the first resource set one by one in ascending order of sequence numbers or frequencies.

In this embodiment of this application, the second part of the resource candidate set corresponding to the high AL includes the second part of the resource candidate set corresponding to the low AL. Because the PDCCH candidate set 8_0 includes the PDCCH candidate set 4_0 and the PDCCH candidate set 4_1, a second part (namely, the resource 8_0) corresponding to the PDCCH candidate set 8_0 includes second parts to which the PDCCH candidate set 4_0 and the PDCCH candidate set 4_1 are respectively mapped, namely, the resource 4_0 and the resource 4_1. By analogy, the PDCCH candidate set 8_1 includes the PDCCH candidate set 4_2 and the PDCCH candidate set 4_3, and the resource 8_1 is a combination of the resource 4_2 and the resource 4_3. The PDCCH candidate set 16_0 includes the PDCCH candidate set 8_0 and the PDCCH candidate set 8_1, and the resource 16_0 is a combination of the resource 8_0 and the resource 8_1. Certainly, the PDCCH candidate set 16_0 includes the DCCH candidate set 4_0 to the PDCCH candidate set 4_3, and the resource 16_0 is a combination of the resource 4_0 and the resource 4_1, and the resource 4_2 and the resource 4_3.

Optionally, a quantity of second parts of resource candidate sets corresponding to the low AL and included in second parts of resource candidate sets corresponding to the high AL may be determined by a ratio of the high AL to the low AL. In an example of an AL of 8 and an AL of 4, 8/4 = 2. In this case, a second part of a resource candidate set at the AL of 8 includes two second parts of resource candidate sets at the AL of 4. In another example of an AL of 16 and an AL of 4, 16/4 = 4. In this case, a second part of a resource candidate set at the AL of 16 includes four second parts of resource candidate sets at the AL of 4.

It should be noted that, if a second part of any resource candidate set is a part of resources to which a first part of the resource candidate set in the first resource set is mapped, when the resources in the first resource set are insufficient for mapping of first parts of all resource candidate sets, a quantity of subcarriers used for carrying PDCCH data in a part of resource candidate sets is less than a quantity of PDCCH data subcarriers when the TR is not used. In this case, it may be agreed that the part of resource candidate sets are not used. Alternatively, when the resources in the first resource set are insufficient for mapping of first parts of all resource candidate sets, mapping may be performed based on an actual quantity of resources in the first resource set, until the resources in the first resource set are completely mapped. In this case, although the quantity of subcarriers used for carrying the PDCCH data in the part of resource candidate sets is less than the quantity of PDCCH data subcarriers when the TR is not used, the PDCCH decoding performance is still better than PDCCH decoding performance when the TR is used in the PDCCH candidate set.

Implementation 2: The second part of the first resource candidate set and the first part of the first resource candidate set are consecutive, or the sequence number of the 1st subcarrier in the second part and the sequence number of the last subcarrier in the first part are consecutive.

When determining each resource candidate set, the terminal device may not consider the reserved carrier, that is, may skip the reserved carrier, and does not consider the reserved carrier as a PDCCH resource. In this way, it is ensured as much as possible that a quantity of subcarriers used for carrying the PDCCH in each resource candidate set does not decrease due to existence of the reserved carrier. For example, when determining the first resource candidate set, the terminal device skips the reserved carrier, and does not consider the reserved carrier as a PDCCH data resource, so that a quantity of subcarriers used for carrying PDCCH data in the first resource candidate set does not decrease due to existence of the reserved carrier.

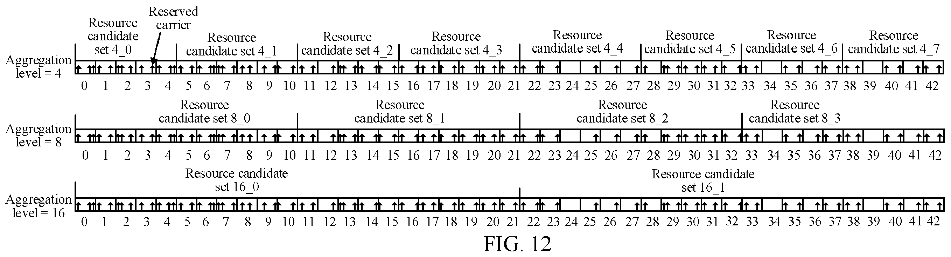

For example, FIG. 12 shows resource candidate sets respectively corresponding to a plurality of ALs (4, 8, and 16). In FIG. 12, an example in which a CCE is used as a resource unit, and 43 CCEs are included is used. The terminal device determines, based on a set of candidate sets corresponding to a lowest AL and the TR pattern, a resource corresponding to each resource candidate set at the lowest AL. For example, the AL = 4, and the terminal device may determine that each PDCCH candidate set includes four CCE resources. For example, the PDCCH candidate set includes a CCE 0 to a CCE 3. Due to existence of the reserved carrier, a quantity of REs that can actually carry the PDCCH data in the CCE 0 to the CCE 3 is less than a quantity of REs that can transmit the PDCCH data in the CCE 0 to the CCE 3 when the TR is not used. Therefore, in this embodiment of this application, except a subcarrier occupied by the reserved carrier, in each PDCCH candidate set, it needs to be further ensured that a quantity of subcarriers that can be actually used for carrying the PDCCH data in resource candidate sets is less than a quantity of subcarriers used for carrying the PDCCH data in the four CCEs when the TR is not used. For example, the terminal device may also use subsequent consecutive resources as candidate resources for carrying the PDCCH data, so that a quantity of resources (data subcarriers) that can be actually used for carrying the PDCCH does not decrease. For example, after the reserved carrier is removed from the CCE 0 to a CCE 4, a quantity of REs that can be actually used for carrying the PDCCH data is not less than the quantity of REs that can be used for carrying the PDCCH data in the CCE 0 to the CCE 3 when the TR is not used. In this case, the CCE 0 to the CCE 4 may be used as one resource candidate set (for example, a resource candidate set 4_0). By analogy, the terminal device may sequentially determine that a resource candidate set 4_1 is a CCE 5 to a CCE 10, a resource candidate set 4_2 is a CCE 11 to a CCE 15, and so on, as shown in FIG. 12. It should be noted that, in the foregoing examples, the CCE is used as the resource unit. A unit of the resource included in the resource candidate set is not limited in this embodiment of this application. For example, the unit of the resource in the resource candidate set may alternatively be an RB, a PRB, a REG, or a REG bundle. For example, the resource candidate set is determined by using the resource unit of an RB, and at least a quantity of data REs or subcarriers used by a PDCCH in the resource candidate set is determined based on a corresponding AL. After a TR reserved subcarrier is finally excluded, the quantity of data REs occupied by the PDCCH in the resource candidate set satisfies a required minimum integer value d of the resource unit of an RB, where d RBs are a quantity of resources in a PDCCH resource candidate set.

In Implementation 2, a resource candidate set corresponding to a high AL may include a resource candidate set corresponding to a low AL. Alternatively, a resource candidate set corresponding to a high AL is a combination of at least one resource candidate set corresponding to a low AL. For example, still refer to FIG. 12. An AL of 4 corresponds to the resource candidate set 4_0 to a resource candidate set 4_7; an AL of 8 corresponds to a resource candidate set 8_0 to a resource candidate set 8_3; and an AL of 16 corresponds to a resource candidate set 16_0 and a resource candidate set 16_1. The resource candidate resource set 8_0 includes the resource candidate set 4_0 and the resource candidate set 4_1, that is, the candidate set 8_0 is the CCE 0 to the CCE 10. By analogy, the resource candidate set 8_1 is the CCE 11 to a CCE 21, the resource candidate set 8_2 is a CCE 22 to a CCE 32, and the resource candidate set 8_3 is a CCE 33 to a CCE 42. Similarly, the resource candidate set 16_0 includes the resource candidate set 8_0 and the resource candidate set 8_1, that is, the resource candidate set 16_0 is the CCE 0 to the CCE 21. Alternatively, the resource candidate set 16_0 includes the resource candidate set 4_0 to the resource candidate set 4_3, that is, the resource candidate set 16_0 is the CCE 0 to the CCE 21. Similarly, the resource candidate set 16_1 is the CCE 22 to the CCE 42.

Optionally, a quantity of resource candidate sets corresponding to the low AL and included in the resource candidate set corresponding to the high AL may be determined by a ratio of the high AL to the low AL. In an example of an AL of 4 and an AL of 8, 8/4 = 2. In this case, a resource candidate set at the AL of 8 includes two resource candidate sets at the AL of 4. In another example of an AL of 4 and an AL of 16, 16/4 = 4. In this case, a resource candidate set at the AL of 16 includes four resource candidate sets at the AL of 4.

It should be noted that, if a second part of any resource candidate set is a part of resources to which a first part of the resource candidate set in the first resource set is mapped, resources in the first resource set may be insufficient for mapping of first parts of all resource candidate sets. In this case, mapping may be performed based on an actual quantity of resources in the first resource set, until the resources in the first resource set are completely mapped. Although a quantity of subcarriers used for carrying the PDCCH data in a part of resource candidate sets is less than a quantity of PDCCH data subcarriers when the TR is not used, PDCCH decoding performance is still better than PDCCH decoding performance when the TR is used in the PDCCH candidate set. Optionally, if the quantity of subcarriers used for carrying the PDCCH data in the resource candidate set is less than the quantity of PDCCH data subcarriers when the TR is not used, and a quantity of resources that are in the second part and that can be for mapping is incomplete, the resource candidate set may not be used.

Optionally, the reserved carriers may be evenly distributed or approximately evenly distributed in frequency domain, or quantities of reserved carriers in the resource candidate sets are similar, so that decoding performance of the terminal device corresponding to each of the resource candidate sets is the same or similar.

Optionally, the reserved carriers are not evenly distributed in frequency domain, or the quantities of reserved carriers in the resource candidate sets are different. In this case, the network device may allocate a resource candidate set with a large quantity of reserved carriers to a terminal device close to the network device for use, and allocate a resource candidate set with a small quantity of reserved carriers to a terminal device far away from the network device for use, to ensure PDCCH decoding performance of a remote terminal device.

In a possible scenario, some ALs are not used. For example, in an NTN scenario, a propagation loss is high, and some low ALs are not used. In this case, the terminal device does not need to perform blind detection at these ALs. Correspondingly, an AL at which the terminal device needs to perform blind detection or an AL at which the terminal device does not need to perform blind detection may be agreed upon based on a communication scenario. For example, in a satellite communication scenario, it is agreed or considered by default that the terminal device does not need to perform blind detection at an AL of 1 and an AL of 2, and blind detection is performed only at the AL of 4/8/16.

Alternatively, the network device may determine whether PDCCH transmission needs to be performed by using the low AL, and then indicate, by using signaling, the AL at which the terminal device needs to perform blind detection or the AL at which the terminal device does not need to perform blind detection. For example, the network device sends second indication information to the terminal device, where the second indication information may indicate the AL at which the terminal device needs to perform blind detection or the AL at which the terminal device does not need to perform blind detection. For example, when the network device determines that the communication scenario is satellite communication, and the network device determines that PDCCH transmission does not need to be performed by using the AL of 1 and the AL of 2, the network device sends second indication information to the terminal device, where the second indication information indicates that the terminal device does not need to perform blind detection at the AL of 1 and the AL of 2. For another example, the network device determines that the communication scenario is terrestrial communication, and the network device indicates, based on the second indication information, the terminal device to perform blind detection at a possible AL, for example, the AL of 1/2/4/8/16. For another example, the network device determines that the communication scenario is terrestrial communication. If a transmission loss is low and channel quality is good, PDCCH transmission does not need to be performed by using the high AL. In this case, the second indication information may indicate that the AL at which the terminal device does not need to perform blind detection is 16, or the second indication information may indicate that the AL at which the terminal device needs to perform blind detection is 1/2/4/8.

Optionally, it may be agreed that the terminal device or the network device determines an AL set for blind detection based on the communication scenario. For example, when the communication scenario is the satellite communication, the terminal device or the network device determines that the AL set for the blind detection is {4/8/16/32}; and when the communication scenario is the terrestrial communication, the terminal device or the network device determines that the AL set for the blind detection is {1/2/4/8/16}. The network device does not need to indicate, to the terminal device, the AL at which blind detection needs to be performed, so that signaling overheads can be reduced.

Alternatively, the AL at which the terminal device needs to perform blind detection or the AL at which the terminal device does not need to perform blind detection may be agreed upon. For example, the terminal device performs blind detection at all ALs by default. For another example, it may be agreed that the terminal device does not need to perform blind detection at the low AL, and only needs to perform blind detection at the high AL. It should be understood that, the high AL and the low AL are relative, and a limit between the high AL and the low AL may be agreed upon. Alternatively, the network device may indicate, to the terminal device, the AL at which blind detection needs to be performed. For example, the network device indicates, to the terminal device by using the signaling, that the AL at which the terminal device needs to perform blind detection is {4/8/16/32}, {2/4/8/16/32}, or {1/2/4/8/16}.

In essence, this embodiment of this application provides a new manner of determining the PDCCH resource, in comparison with a manner in which the terminal device receives the PDCCH by using a blindly detected PDCCH candidate set. It may be considered that there are two manners of determining the PDCCH resource. The network device may indicate, to the terminal device, a manner to be used. For example, in a possible scenario, the decoding performance of the terminal device does not need to be preferentially considered. In this case, the terminal device only needs to receive the PDCCH by using the PDCCH candidate set for blind detection, and does not need to confirm the resource candidate set. The network device may indicate, by using the signaling, that the terminal device does not need to use the solution provided in this embodiment of this application. If the decoding performance of the terminal device needs to be considered, the network device may indicate, by using the signaling, the terminal device to use the solution provided in this embodiment of this application.

The foregoing embodiments may be combined and integrated to form different solutions and different implementations. In addition, the solutions in embodiments of this application and the signaling in embodiments, for example, the first indication information, the second indication information, the first configuration information, the second configuration information, a value of v, information indicating whether the terminal device uses this solution, information indicating whether the terminal device performs blind detection for a PDCCH at a low aggregation level, information indicating that the terminal device does not perform blind detection for a PDCCH at a high aggregation level, and the like may be sent by the network device to the terminal device in a broadcast or multicast manner by using at least one piece of broadcast information including a SIB 1, other system information (other system information, OSI), a MIB, or the like. Sending the foregoing signaling to the terminal device in the broadcast or multicast manner can avoid scheduling different resources for different terminal devices to send the foregoing signaling. In this way, signaling overheads for resource scheduling and system scheduling complexity are reduced.

In addition, if the signaling is sent in an RRC connection setup phase and a subsequent communication process, the network device may include the signaling in at least one piece of information of RRC signaling (for example, an RRC setup (RRC setup) message, RRC reconfiguration (RRC Reconfiguration) signaling, or RRC resume (RRC Resume) signaling), downlink control information (downlink control information, DCI), group DCI, and a medium access control (medium access control, MAC) control element (control element, CE), or indicate the foregoing signaling/parameter value to the terminal device in a table manner, or send the signaling to the terminal device during data transmission or in a separately allocated PDSCH bearer in a unicast or multicast manner. The signaling is sent to the terminal device separately or in groups, so that a parameter value of each terminal device/each group of terminal devices can be flexibly controlled. The network device configures, resource candidate sets with different quantities of reserved carriers for the terminal device based on different positions of terminal devices, to achieve better PDCCH decoding performance of each terminal device as much as possible. For example, the network device may allocate the resource candidate set with the large quantity of reserved carriers to the terminal device close to the network device for use, and allocate the resource candidate set with the small quantity of reserved carriers to the terminal device far away from the network device for use, to ensure the PDCCH decoding performance of the remote terminal device.

In embodiments provided in this application, the method provided in embodiments of this application is separately described from perspectives of the network device, the terminal device, and interaction between the terminal device and the network device. To implement functions in the method provided in the foregoing embodiments of this application, the terminal device and the network device may include a hardware structure and/or a software module, and implement the foregoing functions in a form of a hardware structure, a software module, or a hardware structure plus a software module. Whether a specific function in the foregoing functions is performed by using the hardware structure, the software module, or the hardware structure plus the software module depends on particular applications and design constraints of the technical solutions.

The following describes communication apparatuses for implementing the foregoing method in embodiments of this application with reference to the accompanying drawings.

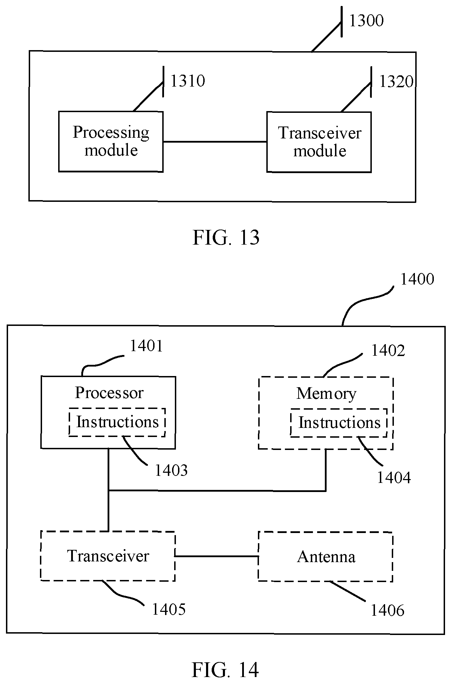

FIG. 13 is a block diagram of a communication apparatus 1300 according to an embodiment of this application. The communication apparatus 1300 may include a processing module 1310 and a transceiver module 1320. Optionally, a storage unit may be further included. The storage unit may be configured to store instructions (code or a program) and/or data. The processing module 1310 and the transceiver module 1320 may be coupled to the storage unit. For example, the processing module 1310 may read the instructions (the code or the program) and/or the data in the storage unit, to implement a corresponding method. The foregoing modules may be independently arranged, or may be partially or completely integrated.

In some possible implementations, the communication apparatus 1300 can correspondingly implement behavior and functions of the terminal device in the foregoing method embodiments. The communication apparatus 1300 may be a terminal device, or may be a part (for example, a chip or a circuit) used in a terminal device, or may be a chip or a chip set in a terminal device, or a part of a chip configured to perform a related method function.

For example, the processing module 1310 may be configured to determine a first resource candidate set; and the transceiver module 1320 is configured to receive data on the first resource candidate set. The first resource candidate set is a resource candidate set in a PDCCH search space blind detection set determined based on a tone reservation pattern; and the PDCCH search space blind detection set includes resource candidate sets respectively corresponding to a plurality of ALs.

In an optional implementation, the first resource candidate set includes X subcarriers, a difference between a sequence number A1 of a 1st subcarrier in the X subcarriers and a sequence number A2 of a last subcarrier in the X subcarriers is greater than X, and at least one reserved subcarrier is included between the 1st subcarrier and the last subcarrier, where X is a positive integer, and A1 and A2 are positive integers.

In an optional implementation, the X subcarriers include a first part and a second part, the first part and the second part are spaced by a part of subcarriers in a second resource candidate set, and an AL corresponding to the second resource candidate set is the same as an AL corresponding to the first resource candidate set.

In an optional implementation, the sequence number of the last subcarrier in the first resource candidate set is less than a sequence number of a last subcarrier in the second resource candidate set.

In an optional implementation, the second part of the first resource candidate set includes a second part of a third resource candidate set, and the AL corresponding to the first resource candidate set is higher than an AL corresponding to the third resource candidate set.

In an optional implementation, the second part belongs to a first resource set, and the method further includes: The terminal device receives first configuration information from a network device, where the first configuration information indicates the first resource set.

In an optional implementation, the second part belongs to a first resource set, and the transceiver module 1320 is further configured to receive second configuration information from a network device, where the second configuration information indicates u PRB groups, $\varphi$ PRB groups in the u PRB groups are the first resource set, and $\varphi = \text{rem}(u, v)$, where rem indicates modulo calculation, u is a positive integer, and v is an AL.

Optionally, the $\varphi$ PRB groups are PRB groups with largest sequence numbers in the u PRB groups; or the $\varphi$ PRB groups are PRB groups with smallest sequence numbers in the u PRB groups.

In an optional implementation, the transceiver module 1320 is further configured to receive first indication information from the network device, where the first indication information indicates a quantity of subcarriers included in a second part corresponding to each of a plurality of resource candidate sets corresponding to the AL corresponding to the first resource candidate set.

In an optional implementation, the transceiver module 1320 is further configured to receive second indication information from the network device, where the second indication information indicates an AL at which the terminal device does not perform blind detection or an AL at which the terminal device performs blind detection.

In some possible implementations, the communication apparatus 1300 can correspondingly implement behavior and functions of the network device in the foregoing method embodiments. The communication apparatus 1300 may be a network device, or may be a part (for example, a chip or a circuit) used in a network device, or may be a chip or a chip set in a network device, or a part of a chip configured to perform a related method function.

For example, the processing module 1310 may be configured to determine a first resource candidate set; and the transceiver module 1320 is configured to send data on the first resource candidate set. The first resource candidate set is a resource candidate set in a PDCCH search space blind detection set determined based on a tone reservation pattern, and the PDCCH search space blind detection set includes resource candidate sets respectively corresponding to a plurality of ALs.

In an optional implementation, the first resource candidate set includes X subcarriers, a difference between a sequence number A1 of a 1st subcarrier in the X subcarriers and a sequence number A2 of a last subcarrier in the X subcarriers is greater than X, and at least one reserved subcarrier is included between the 1st subcarrier and the last subcarrier, where X is a positive integer, and A1 and A2 are positive integers.

In an optional implementation, the X subcarriers include a first part and a second part, the first part and the second part are spaced by a part of subcarriers in a second resource candidate set, and an AL corresponding to the second resource candidate set is the same as an AL corresponding to the first resource candidate set.

In an optional implementation, the sequence number of the last subcarrier in the first resource candidate set is less than a sequence number of a last subcarrier in the second resource candidate set.

In an optional implementation, the second part of the first resource candidate set includes a second part of a third resource candidate set, and the AL corresponding to the first resource candidate set is higher than an AL corresponding to the third resource candidate set.

In an optional implementation, the second part belongs to a first resource set, and the method further includes: The network device sends first configuration information to a terminal device, where the first configuration information indicates the first resource set.

In an optional implementation, the transceiver module 1320 is further configured to send second configuration information to a terminal device, where the second configuration information indicates u PRB groups, φ PRB groups in the u PRB groups are a first resource set, and $\varphi = rem(u, v)$, where rem indicates modulo calculation, u is a positive integer, and v is an AL; and the second part belongs to the first resource set.

In an optional implementation, the transceiver module 1320 is further configured to send first indication information to the terminal device, where the first indication information indicates a quantity of subcarriers included in a second part corresponding to each of a plurality of resource candidate sets corresponding to the AL corresponding to the first resource candidate set.

In an optional implementation, the transceiver module 1320 is further configured to send second indication information to the terminal device, where the second indication information indicates an AL at which the terminal device does not perform blind detection or an AL at which the terminal device performs blind detection.

It should be understood that, in this embodiment of this application, the processing module 1310 may be implemented by a processor or a processor-related circuit component, and the transceiver module 1320 may be implemented by a transceiver or a transceiver-related circuit component, or a communication interface.

FIG. 14 is a block diagram of a communication apparatus 1400 according to an embodiment of this application. The communication apparatus 1400 may be a terminal device, and can implement functions of the terminal device in the method provided in embodiments of this application. Alternatively, the communication apparatus 1400 may be an apparatus that can support the terminal device in implementing a corresponding function in the method provided in embodiments of this application. The communication apparatus 1400 may be a chip system. In this embodiment of this application, the chip system may include a chip, or may include a chip and another discrete component. For a specific function, refer to descriptions in the foregoing method embodiments. Alternatively, the communication apparatus 1400 may be a network device, and can implement functions of the network device in the method provided in embodiments of this application. Alternatively, the communication apparatus 1400 may be an apparatus that can support the network device in implementing a corresponding function in the method provided in embodiments of this application. The communication apparatus 1400 may be a chip system. In this embodiment of this application, the chip system may include a chip, or may include a chip and another discrete component. For a specific function, refer to descriptions in the foregoing method embodiments.

The communication apparatus 1400 includes one or more processors 1401 that may be configured to implement or support the communication apparatus 1400 in implementing the functions of the terminal device in the method provided in embodiments of this application. For details, refer to detailed descriptions in the method examples. Details are not described herein again. The one or more processors 1401 may alternatively be configured to implement or support the communication apparatus 1400 in implementing the functions of the network device in the method provided in embodiments of this application. For details, refer to detailed descriptions in the method examples. Details are not described herein again. The processor 1401 may also be referred to as a processing unit or a processing module, and may implement a specific control function. The processor 1401 may be a general-purpose processor, a dedicated processor, or the like. For example, the processor 1401 includes: a central processing unit, an application processor, a modem processor, a graphics processor, an image signal processor, a digital signal processor, a video codec processor, a controller, a memory, a neural network processor, and/or the like. The central processing unit may be configured to control the communication apparatus 1400, execute a software program, and/or process data. Different processors may be independent components, or may be integrated into one or more processors, for example, integrated into one or more application-specific integrated circuits.

Optionally, the communication apparatus 1400 includes one or more memories 1402 configured to store instructions 1404, and the instructions may be run on the processor 1401, to cause the communication apparatus 1400 to perform the method described in the foregoing method embodiments. The memory 1402 and the processor 1401 may be separately arranged, or may be integrated together. It may also be considered that the memory 1402 is coupled to the processor 1401. Couplings in embodiments of this application are indirect couplings or communication connections between apparatuses, units, or modules. The indirect couplings or communication connections between the apparatuses, the units or the modules may be implemented in electronic, mechanical, or other forms, and are used for information interaction between the apparatuses, the units, or the modules. The processor 1401 may collaboratively operate with the memory 1402. At least one of the at least one memory may be included in the processor. It should be noted that, the memory 1402 is not mandatory. Therefore, the memory 1402 is shown by using a dashed line in FIG. 14.

Optionally, the memory 1402 may further store data. The processor and the memory may be separately arranged, or may be integrated together. In this embodiment of this application, the memory 1402 may be a non-volatile memory, such as a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

Optionally, the communication apparatus 1400 may include instructions 1403 (which may sometimes also be referred to as code or a program), and the instructions 1403 may be run on the processor, to cause the communication apparatus 1400 to perform the method described in the foregoing embodiments. The processor 1401 may store data.

Optionally, the communication apparatus 1400 may further include a transceiver 1405 and an antenna 1406. The transceiver 1405 may be referred to as a transceiver unit, a transceiver module, a transceiver machine, a transceiver circuit, a transceiver, an input/output interface, or the like, and is configured to implement receiving and sending functions of the communication apparatus 1400 through the antenna 1406.

The processor 1401 and the transceiver 1405 described in this application may be implemented on an integrated circuit (integrated circuit, IC), an analog IC, a radio frequency identification (radio frequency identification, RFID) circuit, a mixed signal IC, an ASIC, a printed circuit board (printed circuit board, PCB), an electronic device, or the like. The communication apparatus that is described in this specification and that is for implementation may be an independent device (for example, an independent integrated circuit or a mobile phone), or may be a part of a large device (for example, a module that may be embedded in another device). For details, refer to the foregoing descriptions of the terminal device and the network device. Details are not described herein again.

Optionally, the communication apparatus 1400 may further include one or more of the following parts: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, and the like. It may be understood that, in some embodiments, the communication apparatus 1400 may include more or fewer parts, or some parts are integrated, or some parts are split. These parts may be implemented by hardware, software, or a combination of software and hardware.

It should be noted that, the communication apparatus in the foregoing embodiments may be a terminal device (or a network device), or may be a circuit, or may be a chip used in a terminal device (or a network device), or may be another combined component or part having the functions of the foregoing terminal device (or the network device), or the like. When the communication apparatus is a terminal device (or a network device), the transceiver module may be a transceiver, and may include an antenna, a radio frequency circuit, and the like. The processing module may be a processor, for example, a central processing unit (central processing unit, CPU). When the communication apparatus is a part having the functions of the foregoing terminal device (or the network device), the transceiver module may be a radio frequency unit, and the processing module may be a processor. When the communication apparatus is a chip system, the communication apparatus may be a field programmable gate array (field programmable gate array, FPGA), an application-specific integrated chip (application-specific integrated circuit, ASIC), a system-on-a-chip (system-on-a-chip, SoC), a CPU, a network processor (network processor, NP), a digital signal processing processor (digital signal processor, DSP), a micro controller unit (micro controller unit, MCU), a programmable controller (for example, programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory via another component) and transmit the code instructions to the processor. The processor may be configured to run the code instructions to perform the method in the foregoing method embodiments. For another example, the interface circuit may alternatively be a signal transmission interface circuit between a communication processor and a transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one terminal device and at least one network device. For example, the communication system includes a terminal device and a network device that are configured to implement related functions in FIG. 5. For details, refer to related descriptions in the foregoing method embodiments. Details are not described herein again.

An embodiment of this application further provides a computer-readable storage medium, including instructions. When the instructions are run on a computer, the computer is caused to perform the method performed by the terminal device or the network device in FIG. 5.

An embodiment of this application further provides a computer program product, including instructions. When the instructions are run on a computer, the computer is caused to perform the method performed by the terminal device or the network device in FIG. 5.

An embodiment of this application provides a chip system. The chip system includes a processor, and may further include a memory, to implement functions of the terminal device in the foregoing method, or to implement functions of the network device in the foregoing method. The chip system may include a chip, or may include a chip and another discrete component.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, various illustrative logical blocks (illustrative logical blocks) and steps (steps) described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific operating process of the foregoing systems, apparatuses, and units, refer to a corresponding process in the foregoing method embodiments. Details are not described herein again.

In several embodiments provided in this application, it should be understood that the disclosed systems, the apparatuses, and the method may be implemented in other manners. For example, apparatus embodiments described above are merely an example. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, to be specific, may be located in one place, or may be distributed on a plurality of network units. A part or all of the units may be selected based on an actual requirement to achieve the objectives of the solutions in embodiments.

When the functions are implemented in a form of a software functional unit and sold or used as an independent product, the functions may be stored in a computer-readable storage medium. Based on such an understanding, the technical solutions of this application essentially, or the part making contributions, or a part of the technical solutions may be embodied in a form of a software product. The computer software product is stored in a storage medium, and includes several instructions for instructing a computer device (which may be a personal computer, a server, a network device, or the like) to perform all or a part of steps of the method in embodiments of this application. The foregoing storage medium includes any medium, such as a USB flash drive, a removable hard disk, a read-only memory (read-only memory, ROM), a RAM, a magnetic disk, or an optical disc, that can store program code.

It is clear that, a person skilled in the art may make various modifications and variations to this application without departing from the scope of this application. This application is intended to cover these modifications and variations of this application provided that they fall within the scope of protection defined by the claims and their equivalent technologies.

**Claims**

1. A communication method, comprising:

   determining, by a first communication apparatus, a first resource candidate set, wherein the first resource candidate set is a resource candidate set in a PDCCH search space blind detection set determined based on a tone reservation pattern, and the PDCCH search space blind detection set comprises resource candidate sets respectively corresponding to a plurality of aggregation levels ALs; and
   sending or receiving, by the first communication apparatus, data on the first resource candidate set.

2. The method according to claim 1, wherein the first resource candidate set comprises X subcarriers, a difference between a sequence number A1 of a 1st subcarrier in the X subcarriers and a sequence number A2 of a last subcarrier in the X subcarriers is greater than X, and at least one reserved subcarrier is comprised between the 1st subcarrier and

the last subcarrier, wherein X is a positive integer, and A1 and A2 are positive integers.

3. The method according to claim 2, wherein the X subcarriers comprise a first part and a second part, the first part and the second part are spaced by a part of subcarriers in a second resource candidate set, and an AL corresponding to the second resource candidate set is the same as an AL corresponding to the first resource candidate set.

4. The method according to claim 2 or 3, wherein the sequence number of the last subcarrier in the first resource candidate set is less than a sequence number of a last subcarrier in the second resource candidate set.

5. The method according to claim 3 or 4, wherein the second part of the first resource candidate set comprises a second part of a third resource candidate set, and the AL corresponding to the first resource candidate set is higher than an AL corresponding to the third resource candidate set.

6. The method according to any one of claims 3 to 5, wherein the first communication apparatus is a terminal device or a chip in the terminal device, the second part belongs to a first resource set, and the method further comprises: receiving, by the first communication apparatus, first configuration information from a network device, wherein the first configuration information indicates the first resource set.

7. The method according to any one of claims 3 to 5, wherein the first communication apparatus is a terminal device or a chip in the terminal device, the second part belongs to a first resource set, and the method further comprises: receiving, by the first communication apparatus, second configuration information from a network device, wherein the second configuration information indicates u physical resource block PRB groups, $\varphi$ PRB groups in the u PRB groups are the first resource set, and $\varphi = \text{rem}(u, v)$, wherein rem indicates modulo calculation, u is a positive integer, and v is an AL.

8. The method according to any one of claims 3 to 7, wherein the first communication apparatus is the terminal device or the chip in the terminal device, and the method further comprises: receiving, by the first communication apparatus, first indication information from the network device, wherein the first indication information indicates a quantity of subcarriers comprised in a second part corresponding to each of a plurality of resource candidate sets corresponding to the AL corresponding to the first resource candidate set.

9. The method according to any one of claims 1 to 8, wherein the first communication apparatus is the terminal device or the chip in the terminal device, and the method further comprises: receiving, by the first communication apparatus, second indication information from the network device, wherein the second indication information indicates an AL at which the first communication apparatus does not perform blind detection or an AL at which the first communication apparatus performs blind detection.

10. The method according to any one of claims 3 to 5, wherein the first communication apparatus is a network device or a chip in the network device, the second part belongs to a first resource set, and the method further comprises: sending, by the first communication apparatus, first configuration information to a terminal device, wherein the first configuration information indicates the first resource set.

11. The method according to any one of claims 3 to 5, wherein the first communication apparatus is a network device or a chip in the network device, and the method further comprises: sending, by the first communication apparatus, second configuration information to a terminal device, wherein the second configuration information indicates u physical resource block PRB groups, $\varphi$ PRB groups in the u PRB groups are a first resource set, and $\varphi = \text{rem}(u, v)$, wherein rem indicates modulo calculation, u is a positive integer, and v is an AL; and the second part belongs to the first resource set.

12. The method according to any one of claims 3 to 7, wherein the first communication apparatus is the network device or the chip in the network device, and the method further comprises: sending, by the first communication apparatus, first indication information to the terminal device, wherein the first indication information indicates a quantity of subcarriers comprised in a second part corresponding to each of a plurality of resource candidate sets corresponding to the AL corresponding to the first resource candidate set.

13. The method according to any one of claims 1 to 8, wherein the first communication apparatus is the network device or the chip in the network device, and the method further comprises: sending, by the first communication apparatus, second indication information to the terminal device, wherein the second indication information indicates an AL at which the terminal device does not perform blind detection or an AL at which the terminal device performs blind detection.

14. A communication apparatus, comprising a processing module and a transceiver module, wherein

the processing module is configured to determine a first resource candidate set, wherein the first resource candidate set is a resource candidate set in a PDCCH search space blind detection set determined based on a tone reservation pattern, and the PDCCH search space blind detection set comprises resource candidate sets respectively corresponding to a plurality of aggregation levels ALs; and
the transceiver module is configured to send or receive data on the first resource candidate set.

15. The apparatus according to claim 14, wherein the first resource candidate set comprises X subcarriers, a difference between a sequence number A1 of a 1st subcarrier in the X subcarriers and a sequence number A2 of a last subcarrier in the X subcarriers is greater than X, and at least one reserved subcarrier is comprised between the 1st subcarrier and the last subcarrier, wherein X is a positive integer, and A1 and A2 are positive integers.

16. The apparatus according to claim 15, wherein the X subcarriers comprise a first part and a second part, the first part and the second part are spaced by a part of subcarriers in a second resource candidate set, and an AL corresponding to the second resource candidate set is the same as an AL corresponding to the first resource candidate set.

17. The apparatus according to claim 15 or 16, wherein the sequence number of the last subcarrier in the first resource candidate set is less than a sequence number of a last subcarrier in the second resource candidate set.

18. The apparatus according to claim 16 or 17, wherein the second part of the first resource candidate set comprises a second part of a third resource candidate set, and the AL corresponding to the first resource candidate set is higher than an AL corresponding to the third resource candidate set.

19. The apparatus according to any one of claims 16 to 18, wherein the communication apparatus is a terminal device or a chip in the terminal device, the second part belongs to a first resource set, and the transceiver module is further configured to receive first configuration information from a network device, wherein the first configuration information indicates the first resource set.

20. The apparatus according to any one of claims 16 to 18, wherein the communication apparatus is a terminal device or a chip in the terminal device, the second part belongs to a first resource set, and the transceiver module is further configured to receive second configuration information from a network device, wherein the second configuration information indicates u physical resource block PRB groups, $\varphi$ PRB groups in the u PRB groups are the first resource set, and $\varphi = \mathrm{rem}(u, v)$, wherein rem indicates modulo calculation, u is a positive integer, and v is an AL.

21. The apparatus according to any one of claims 16 to 20, wherein the communication apparatus is the terminal device or the chip in the terminal device, and the transceiver module is further configured to receive first indication information from the network device, wherein the first indication information indicates a quantity of subcarriers comprised in a second part corresponding to each of a plurality of resource candidate sets corresponding to the AL corresponding to the first resource candidate set.

22. The apparatus according to any one of claims 14 to 21, wherein the communication apparatus is the terminal device or the chip in the terminal device, and the transceiver module is further configured to receive second indication information from the network device, wherein the second indication information indicates an AL at which the communication apparatus does not perform blind detection or an AL at which the communication apparatus performs blind detection.

23. The apparatus according to any one of claims 16 to 18, wherein the communication apparatus is a network device or a chip in the network device, the second part belongs to a first resource set, and the transceiver module is further configured to send first configuration information to a terminal device, wherein the first configuration information indicates the first resource set.

24. The apparatus according to any one of claims 16 to 18, wherein the communication apparatus is a network device or a chip in the network device, and the transceiver module is further configured to send second configuration information to a terminal device, wherein the second configuration information indicates u physical resource block PRB groups, $\varphi$

PRB groups in the u PRB groups are a first resource set, $\varphi = \text{rem}(u, v)$, wherein rem indicates modulo calculation, u is a positive integer, and v is an AL; and the second part belongs to the first resource set.

25. The apparatus according to any one of claims 16 to 20, wherein the communication apparatus is the network device or the chip in the network device, and the transceiver module is further configured to send first indication information to the terminal device, wherein the first indication information indicates a quantity of subcarriers comprised in a second part corresponding to each of a plurality of resource candidate sets corresponding to the AL corresponding to the first resource candidate set.

26. The apparatus according to any one of claims 14 to 21, wherein the communication apparatus is the network device or the chip in the network device, and the transceiver module is further configured to send second indication information to the terminal device, wherein the second indication information indicates an AL at which the terminal device does not perform blind detection or an AL at which the terminal device performs blind detection.

27. A communication apparatus, comprising a processor, wherein the processor is coupled to a memory, the memory is configured to store a computer program, and the processor is configured to execute the computer program stored in the memory, to cause the communication apparatus to implement the method according to any one of claims 1 to 13.

28. The communication apparatus according to claim 27, wherein the communication apparatus further comprises the memory.

29. A communication system, wherein the communication system comprises a terminal device and a network device, the terminal device is configured to implement the method according to any one of claims 1 to 9, and the network device is configured to implement the method according to any one of claims 1 to 5 and claims 10 to 13.

30. A computer-readable storage medium, wherein the computer-readable storage medium stores a computer program; and when the computer program is executed by a computer, the computer is caused to perform the method according to any one of claims 1 to 13.

31. A computer program product, wherein the computer program product comprises computer program code; and when the computer program code is run, the computer is caused to perform the method according to any one of claims 1 to 13.

FIG. 1

Satellite

Service link

Feeder link

Terminal
device

Terminal
device

Gateway

Base
station

FIG. 2

FIG. 3

A PDCCH search space blind detection set includes: 4_0 {0, 1, 2, 3}, 4_1 {8, 9, 10, 11},
4_2 {16, 17, 18, 19}, 4_3 {24, 25. 26, 27}, 8_0 {0, 1, 2, 3, 4, 5, 6, 7},
8_1 {16, 17, 18, 19, 20, 21, 22, 23}, and 16_0 {0, 1, 2, 3, 4, 5, 6, 7, 8, 9, 10, 11, 12, 13, 14, 15}

4_0 {0, 1, 2, 3}    4_1 {8, 9, 10, 11}    4_2 {16, 17, 18, 19}    4_3 {24, 25, 26, 27}

Aggregation level = 4

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

8_0 {0, 1, 2, 3, 4, 5, 6, 7}    8_1 {16, 17, 18, 19, 20, 21, 22, 23}

Aggregation level = 8

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

16_0 {0, 1, 2, 3, 4, 5, 6, 7, 8, 9, 10, 11, 12, 13, 14, 15}

Aggregation level = 16

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

| System frame number 0 | | | |
|---|---|---|---|
| Subframe 0 | | Subframe 1 | |
| Slot 0 | Slot 1 | Slot 2 | Slot 3 |
| 0 1 2 3 4 5 6 7 8 9 10 11 12 13 | 1 2 2 3 4 5 6 7 8 9 10 11 12 13 | 0 1 2 3 4 5 6 7 8 9 10 11 12 13 | 1 2 2 3 4 5 6 7 8 9 10 11 12 13 |

FIG. 4

```
┌──────────┐                              ┌──────────┐
│ Terminal │                              │ Network  │
│  device  │                              │  device  │
└──────────┘                              └──────────┘
     │                                         │
     │        First indication information     │
     │ ◄ ─ ─ ─ ─ ─ ─ ─ ─ ─ ─ ─ ─ ─ ─ ─ ─ ─ ─ ─ │
     │                                         │
     │   First configuration information/Second│
     │        configuration information        │
     │ ◄ ─ ─ ─ ─ ─ ─ ─ ─ ─ ─ ─ ─ ─ ─ ─ ─ ─ ─ ─ │
     │                                         │
     │       Second indication information     │
     │ ◄ ─ ─ ─ ─ ─ ─ ─ ─ ─ ─ ─ ─ ─ ─ ─ ─ ─ ─ ─ │
     │                              ┌──────────┴──────────┐
     │                              │   Determine a first │
     │                              │ resource candidate set│
     │                              └──────────┬──────────┘
┌────┴─────────────────────┐                   │
│ S501: Determine a first  │                   │
│  resource candidate set  │                   │
└────┬─────────────────────┘                   │
     │         S502: PDCCH                      │
     │  (carried on a resource in the first     │
     │       resource candidate set)            │
     │ ◄───────────────────────────────────────│
     │                                         │
```

FIG. 5

FIG. 6

FIG. 7

EP 4 626 109 A1

FIG. 8

EP 4 626 109 A1

PDCCH
candidate set 0

PDCCH
candidate set 1

Resource    Resource
subset 0    subset 1

0    1    2    3    4    5    6    7    8    9    10    11    12    13    14    15    16    17

PDCCH
candidate set 2

PDCCH
candidate set 3

Resource  Resource
subset 2    subset 3

FIG. 9

FIG. 10

FIG. 11

Reserved
carrier

Resource
candidate
set 4_0

Resource
candidate set 4_1

Resource
candidate set 4_2

Resource
candidate set 4_3

Resource
candidate set 4_4

Resource
candidate set 4_5

Resource
candidate set 4_6

Resource
candidate set 4_7

Aggregation
level = 4

0  1  2  3  4  5  6  7  8  9  10  11  12  13  14  15  16  17  18  19  20  21  22  23  24  25  26  27  28  29  30  31  32  33  34  35  36  37  38  39  40  41  42

Resource
candidate set 8_0

Resource
candidate set 8_1

Resource
candidate set 8_2

Resource
candidate set 8_3

Aggregation
level = 8

0  1  2  3  4  5  6  7  8  9  10  11  12  13  14  15  16  17  18  19  20  21  22  23  24  25  26  27  28  29  30  31  32  33  34  35  36  37  38  39  40  41  42

Resource candidate
set 16_0

Resource candidate
set 16_1

Aggregation
level = 16

0  1  2  3  4  5  6  7  8  9  10  11  12  13  14  15  16  17  18  19  20  21  22  23  24  25  26  27  28  29  30  31  32  33  34  35  36  37  38  39  40  41  42

FIG. 12

1300

Processing module 1310

Transceiver module 1320

FIG. 13

1400

Processor 1401

Instructions 1403

Memory 1402

Instructions 1404

Transceiver 1405

Antenna 1406

FIG. 14

ation No.

**PCT/CN2023/139851**

### A. CLASSIFICATION OF SUBJECT MATTER

H04W 72/0453(2023.01)i

According to International Patent Classification (IPC) or to both national classification and IPC

### B. FIELDS SEARCHED

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP, CNKI, IEEE: 资源, 候选, 预留载波, 载波预留, 盲检测, 聚合等级, resource, AL, PDCCH, TR, aggregation level, tone reservation

### C. DOCUMENTS CONSIDERED TO BE RELEVANT

| Category* | Citation of document, with indication, where appropriate, of the relevant passages | Relevant to claim No. |
|---|---|---|
| X | CN 101984708 A (ZTE CORP.) 09 March 2011 (2011-03-09) description, paragraphs [0023]-[0042] | 1-31 |
| A | CN 101848501 A (ZTE CORP.) 29 September 2010 (2010-09-29) entire document | 1-31 |
| A | CN 102014505 A (DATANG MOBILE COMMUNICATIONS EQUIPMENT CO., LTD.) 13 April 2011 (2011-04-13) entire document | 1-31 |
| A | MODERATOR (CHINA TELECOM). "[103-e-NR-CovEnh-04] Summary of Email Discussion on PUSCH Coverage Enhancements" *3GPP TSG RAN WG1 Meeting #103-e, R1-2009814*, 13 November 2020 (2020-11-13), entire document | 1-31 |
| A | CHAIRMAN. "RAN1 Chairman's Notes" *3GPP TSG RAN WG1 Meeting #104-e*, 13 November 2020 (2020-11-13), entire document | 1-31 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 February 2024** | **29 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**Information on patent family members**

| Patent document cited in search report | | | Publication date (day/month/year) | Patent family member(s) | | | Publication date (day/month/year) |
|---|---|---|---|---|---|---|---|
| CN | 101984708 | A | 09 March 2011 | None | | | |
| CN | 101848501 | A | 29 September 2010 | JP | 2012521691 | A | 13 September 2012 |
| | | | | WO | 2010108348 | A1 | 30 September 2010 |
| | | | | US | 2012009935 | A1 | 12 January 2012 |
| | | | | EP | 2413650 | A1 | 01 February 2012 |
| CN | 102014505 | A | 13 April 2011 | WO | 2011054176 | A1 | 12 May 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211642123